# EUROPEAN PATENT APPLICATION

(11) **EP 4 614 823 A1**
(43) Date of publication of application: **10.09.2025**
(21) Application number: 22964444.8
(22) Date of filing: 02.11.2022
(51) Int. Cl.: H04B 7/0413, H04L 27/26

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/041085
(87) International publication number: WO 2024/095426

(57) **Abstract**

A terminal according to one aspect of the present disclosure includes a receiving section that receives a configuration of one or two codewords for a physical uplink shared channel, and a control section that controls transmission of the physical uplink shared channel with a rank from 4, based on the configuration. According to an aspect of the present disclosure, it is possible to use an appropriate number of DMRS ports.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), a method of beam management is introduced. For example, for NR, forming (or using) beams in at least one of a base station and a user terminal (User Equipment (UE)) has been under study.

On the other hand, for orthogonalization of a layer, and the like, reference signals (for example, demodulation reference signals (DMRSs)) with a plurality of ports are used. The future radio communication systems require the number of DMRS ports to be increased compared with that of an existing specification. However, studies have not yet advanced how to increase the number of DMRS ports. Unless an appropriate number of DMRS ports is available, communication throughput / communication quality may deteriorate.

Thus, an object of the present disclosure is to provide a terminal, a radio communication method, and a base station that use an appropriate number of DMRS ports.

### Solution to Problem

A terminal according to one aspect of the present disclosure includes a receiving section that receives a configuration of one or two codewords for a physical uplink shared channel, and a control section that controls transmission of the physical uplink shared channel with a rank from 4, based on the configuration. Advantageous Effects of Invention

According to an aspect of the present disclosure, it is possible to use an appropriate number of DMRS ports.

### Brief Description of Drawings

[FIG. 1] FIG. 1 shows an example of a DMRS port table for DMRS type 1.
[FIG. 2] FIG. 2 shows an example of a DMRS port table for DMRS type 2.
[FIG. 3] FIGS. 3A and 3B show examples of an FD-OCC having a length of 4.
[FIG. 4] FIG. 4 shows an example of a DMRS port table for DMRS enhanced type 1.
[FIG. 5] FIG. 5 shows an example of a DMRS port table for DMRS enhanced type 2.
[FIG. 6] FIG. 6 shows an example of a new antenna port table when Rel-18 DMRS port(s) are used.
[FIG. 7] FIG. 7 shows an example of an existing antenna port table according to Embodiment #0-0.
[FIG. 8] FIG. 8 shows another example of an existing antenna port table according to Embodiment #0-0.
[FIG. 9] FIG. 9 shows an example of a new antenna port table according to Embodiment #0-0.
[FIG. 10] FIG. 10 shows another example of a new antenna port table according to Embodiment #0-0.
[FIG. 11] FIG. 11 shows an example of an antenna port table when increase in a size of an antenna port field is configured according to Embodiment #0-1.
[FIG. 12] FIG. 12 shows an example of values of a DMRS port offset indicator field according to Embodiment #0-2.
[FIG. 13] FIG. 13 shows an example of a normal antenna port table according to Embodiment #1.
[FIG. 14] FIG. 14 shows an example of an enhanced antenna port table according to Embodiment #1.
[FIG. 15] FIG. 15 shows another example of a normal antenna port table according to Embodiment #1.
[FIG. 16] FIG. 16 shows an example of normal antenna port table #1 according to Embodiment #1.
[FIG. 17] FIG. 17 shows an example of an antenna port table in which two CWs and a rank greater than 4 are available according to Embodiment #1.
[FIG. 18] FIG. 18 shows an example of an existing antenna port table according to Embodiment #2-0-0.
[FIG. 19] FIG. 19 shows an example of a new antenna port table according to Embodiment #2-0-0.
[FIG. 20] FIG. 20 shows an example of a normal antenna port table for rank 1 according to Embodiment #2-1.
[FIG. 21] FIG. 21 shows an example of an antenna port table for DMRS enhanced type = 1, maximum DMRS length = 1, and rank = 2 according to Embodiment #2-1.
[FIG. 22] FIG. 22 shows an example of an antenna port table for DMRS enhanced type = 1, maximum DMRS length = 1, and rank = 3 according to Embodiment #2-1.
[FIG. 23] FIG. 23 shows an example of an antenna port table for DMRS enhanced type = 1, maximum DMRS length = 1, and rank = 4 according to Embodiment #2-1.
[FIG. 24] FIG. 24 shows an example of an antenna port table for DMRS enhanced type = 1, maximum DMRS length = 2, and rank = 1 according to Embodiment #2-2.
[FIG. 25] FIG. 25 shows an example of an antenna port table for DMRS enhanced type = 1, maximum DMRS length = 2, and rank = 2 according to Embodiment #2-2.
[FIG. 26] FIG. 26 shows an example of an antenna port table for DMRS enhanced type = 1, maximum DMRS length = 2, and rank = 3 according to Embodiment #2-2.
[FIG. 27] FIG. 27 shows an example of an antenna port table for DMRS enhanced type = 1, maximum DMRS length = 2, and rank = 4 according to Embodiment #2-2.
[FIG. 28] FIG. 28 shows an example of an antenna port table for DMRS enhanced type = 2, maximum DMRS length = 1, and rank = 1 according to Embodiment #2-3.
[FIG. 29] FIG. 29 shows an example of an antenna port table for DMRS enhanced type = 2, maximum DMRS length = 1, and rank = 2 according to Embodiment #2-3.
[FIG. 30] FIG. 30 shows an example of an antenna port table for DMRS enhanced type = 2, maximum DMRS length = 1, and rank = 3 according to Embodiment #2-3.
[FIG. 31] FIG. 31 shows an example of an antenna port table for DMRS enhanced type = 2, maximum DMRS length = 1, and rank = 4 according to Embodiment #2-3.
[FIG. 32] FIG. 32 shows an example of a first part of an antenna port table for DMRS enhanced type = 2, maximum DMRS length = 2, and rank = 1 according to Embodiment #2-4.
[FIG. 33] FIG. 33 shows an example of a second part of an antenna port table for DMRS enhanced type = 2, maximum DMRS length = 2, and rank = 1 according to Embodiment #2-4.
[FIG. 34] FIG. 34 shows an example of a first part of an antenna port table for DMRS enhanced type = 2, maximum DMRS length = 2, and rank = 2 according to Embodiment #2-4.
[FIG. 35] FIG. 35 shows an example of a second part of an antenna port table for DMRS enhanced type = 2, maximum DMRS length = 2, and rank = 2 according to Embodiment #2-4.
[FIG. 36] FIG. 36 shows an example of an antenna port table for DMRS enhanced type = 2, maximum DMRS length = 2, and rank = 3 according to Embodiment #2-4.
[FIG. 37] FIG. 37 shows an example of an antenna port table for DMRS enhanced type = 2, maximum DMRS length = 2, and rank = 4 according to Embodiment #2-4.
[FIG. 38] FIG. 38 shows an example of an antenna port table for DMRS enhanced type = 1, maximum DMRS length = 1, and rank = 5 according to Embodiment #3-1.
[FIG. 39] FIG. 39 shows an example of an antenna port table for DMRS enhanced type = 1, maximum DMRS length = 1, and rank = 6 according to Embodiment #3-1.
[FIG. 40] FIG. 40 shows an example of an antenna port table for DMRS enhanced type = 1, maximum DMRS length = 1, and rank = 7 according to Embodiment #3-1.
[FIG. 41] FIG. 41 shows an example of an antenna port table for DMRS enhanced type = 1, maximum DMRS length = 1, and rank = 8 according to Embodiment #3-1.
[FIG. 42] FIG. 42 shows an example of an antenna port table for DMRS enhanced type = 1, maximum DMRS length = 1, and rank = 5 according to Embodiment #A.
[FIG. 43] FIG. 43 shows an example of an antenna port table for DMRS enhanced type = 1, maximum DMRS length = 1, and rank = 6 according to Embodiment #A.
[FIG. 44] FIG. 44 shows an example of an antenna port table for DMRS enhanced type = 1, maximum DMRS length = 1, and rank = 7 according to Embodiment #A.
[FIG. 45] FIG. 45 shows an example of an antenna port table for DMRS enhanced type = 1, maximum DMRS length = 1, and rank = 8 according to Embodiment #A.
[FIG. 46] FIG. 46 shows an example of an antenna port table for DMRS enhanced type = 2, maximum DMRS length = 1, and rank = 5 according to Embodiment #A.
[FIG. 47] FIG. 47 shows an example of an antenna port table for DMRS enhanced type = 2, maximum DMRS length = 1, and rank = 6 according to Embodiment #A.
[FIG. 48] FIG. 48 shows an example of an antenna port table for DMRS enhanced type = 2, maximum DMRS length = 1, and rank = 7 according to Embodiment #A.
[FIG. 49] FIG. 49 shows an example of an antenna port table for DMRS enhanced type = 2, maximum DMRS length = 1, and rank = 8 according to Embodiment #A.
[FIG. 50] FIG. 50 is a diagram to show an example of a schematic structure of a radio communication system according to one embodiment.
[FIG. 51] FIG. 51 is a diagram to show an example of a structure of a base station according to one embodiment.
[FIG. 52] FIG. 52 is a diagram to show an example of a structure of a user terminal according to one embodiment.
[FIG. 53] FIG. 53 is a diagram to show an example of a hardware structure of the base station and the user terminal according to one embodiment.
[FIG. 54] FIG. 54 is a diagram to show an example of a vehicle according to one embodiment.

### Description of Embodiments

### (Beam Management)

In NR, a method of beam management is introduced. For example, for NR, forming (or using) beams in at least one of a base station and a UE has been under study.

Through application of beam forming (BF), it is expected that difficulty in securing coverage due to increase in carrier frequency be reduced, and radio wave propagation loss be reduced.

BF is, for example, a technique in which a beam (antenna directivity) is formed by controlling (also referred to as precoding) amplitude/phase of a signal that is transmitted or received from each element by using an ultra multi-element antenna. Note that Multiple Input Multiple Output (MIMO) using such an ultra multi-element antenna is also referred to as massive MIMO.

Sweeping of beams may be performed in both transmission and reception, and control may be performed so that an appropriate pair is selected from candidates for a plurality of patterns of transmit and receive beam pairs. The pair of the transmit beam and the receive beam may be referred to as a beam pair, and may be identified as a beam pair candidate index.

Note that, in beam management, a single beam is not used, and a plurality of levels of beam control, such as a rough beam and a fine beam, may be performed.

BF can be categorized into digital BF and analog BF. Digital BF and analog BF may be referred to as digital precoding and analog precoding, respectively.

Digital BF is, for example, a method in which precoding signal processing is performed on a baseband (for a digital signal). In this case, as many parallel processings, such as inverse fast Fourier transform (IFFT), digital to analog conversion (Digital to Analog Converter (DAC)), and Radio Frequency (RF), as the number of antenna ports (or RF chains) are required. At the same time, as many beams as the number of RF chains can be formed at any timing.

Analog BF is, for example, a method in which a phase shifter is used in RF. In analog BF, a plurality of beams cannot be formed at the same timing; however, a configuration thereof is easy and can be implemented at a low cost because it is only necessary that phase of RF signals be rotated.

Note that a hybrid BF configuration, which is a combination of digital BF and analog BF, can be implemented as well. In NR, introduction of massive MIMO has been under study. When forming of a great number of beams is intended to be performed by means of only digital BF, however, a circuit configuration costs much. Thus, use of the hybrid BF configuration is also assumed.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (which may be referred to as a signal/channel; hereinafter, in a similar manner, "A/B" may be interpreted as "at least one of A and B") based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter

Types A to C may correspond to QCL information related to synchronization processing of at least one of time and frequency, and type D may correspond to QCL information related to beam control.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another downlink reference signal (DL-RS)). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS (DL-RS) to have a QCL relationship with the channel may be, for example, at least one of a synchronization signal block (SSB), a channel state information reference signal (CSI-RS), and a reference signal for measurement (Sounding Reference Signal (SRS)). Alternatively, the DL-RS may be a CSI-RS used for tracking (also referred to as a Tracking Reference Signal (TRS)), or a reference signal used for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information (one or a plurality of QCL information) ("QCL-Info"). The QCL information may include at least one of information related to the DL-RS to have a QCL relationship (DL-RS relation information) and information indicating a QCL type (QCL type information). The DL-RS relation information may include information such as an index of the DL-RS (for example, an SSB index, or a non-zero power CSI-RS (NZP CSI-RS) resource ID (Identifier)), an index of a cell in which the RS is located, and an index of a Bandwidth Part (BWP) in which the RS is located.

### (Progress of MIMO Technology and Beam)

Incidentally, the MIMO technology thus far has been used in a frequency band lower than 6 GHz, but it is studied that the MIMO technology is also applied to a frequency band higher than 6 GHz in the future.

Note that a frequency band lower than 7.125 GHz may be referred to as a frequency range (FR) 1 and so on. A frequency band higher than 7.125 GHz / 24.250 GHz may be referred to as FR2, FR2-1, FR2-2, a millimeter wave (mmW), FR4, and so on.

A maximum number of MIMO layers is assumed to be limited by an antenna size.

Even in a case of the mmW, it is expected that high-order MIMO is used and a plurality of UEs cooperate with each other, thereby improving a degree of freedom and diversity of MIMO multiplexing and enhancing throughput.

Thus, in future radio communication systems (for example, Rel-17 (or later versions) NR), it is assumed that even in a case of a high frequency (for example, FR2), operation using only a digital beam without using an analog beam (which may be referred to as full digital operation) is used and operation dominantly using a digital beam is used.

For example, in a case of the full digital operation, orthogonal precoding (or orthogonal beams, digital beams) is simultaneously applied to a plurality of UEs, thereby allowing improvement in frequency use efficiency to be expected. When the digital beams cannot be appropriately applied, interference between the UEs increases, leading to deterioration of communication quality (or reduction of cell capacity). Note that "orthogonal" in the present disclosure may be interpreted as "semi-orthogonal."

When a base station (which may be interpreted as a transmission/reception point (TRP), a panel, or the like) can transmit only one beam at a certain time, the base station switches a beam for a UE to perform transmission and reception. When the base station can transmit a plurality of beams at a certain time, the base station can perform transmission and reception to and from a plurality of UEs by simultaneously using different beams.

Even if the base station becomes full digital, a Rel-15 UE is to be accommodated (supported) as long as the Rel-15 UE is present.

### (DMRS)

A front-loaded DMRS is the first DMRS (in the first symbol or a symbol near the first symbol) for faster demodulation. An additional DMRS can be configured by RRC for a high speed moving UE or a high modulation and coding scheme (MCS) / rank. A frequency location of the additional DMRS is the same as that of the front-loaded DMRS.

DMRS mapping type A or B is configured for a time domain. In DMRS mapping type A, DMRS location l_0 is counted by a symbol index in a slot. l_0 is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location l_0 is counted by a symbol index in a PDSCH/PUSCH. l_0 is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding=disabled) and DFT-S-OFDM (transport precoding=enabled). In DMRS configuration type 1, a DMRS sequence is mapped to one subcarrier every two subcarriers in the frequency domain, and thus up to two DMRSs can be subjected to FDM. DMRS configuration type 2 is applicable to only CP-OFDM. In DMRS configuration type 2, a DMRS sequence is mapped to two consecutive subcarriers every six subcarriers in the frequency domain, and thus up to three DMRSs can be subjected to FDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

A double-symbol DMRS is used for more DMRS ports (especially for MU-MIMO). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.
- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same RE (time and frequency resources) are referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC having a length of 2. In a plurality of DMRS CDM groups (two DMRS CDM groups), two DMRS ports are multiplexed by FDM.

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC. In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

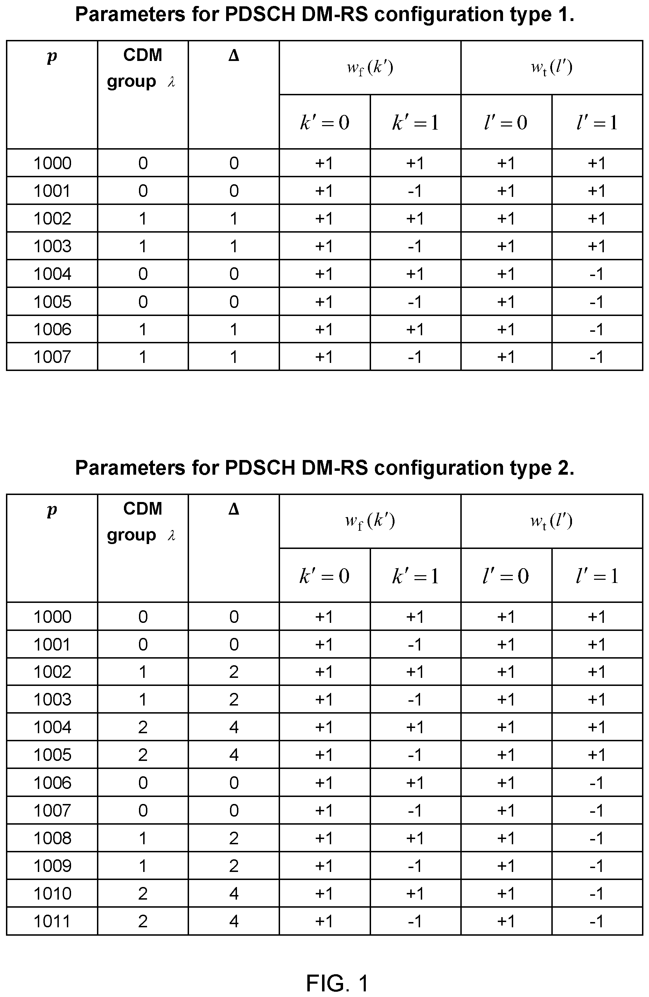

In parameters for a PDSCH DMRS (existing DMRS port table, Rel-15 DMRS port table, FIG. 1), DMRS ports 1000 to 1007 and DMRS ports 1000 to 1011 can be used for DMRS configuration type 1 and DMRS configuration type 2, respectively.

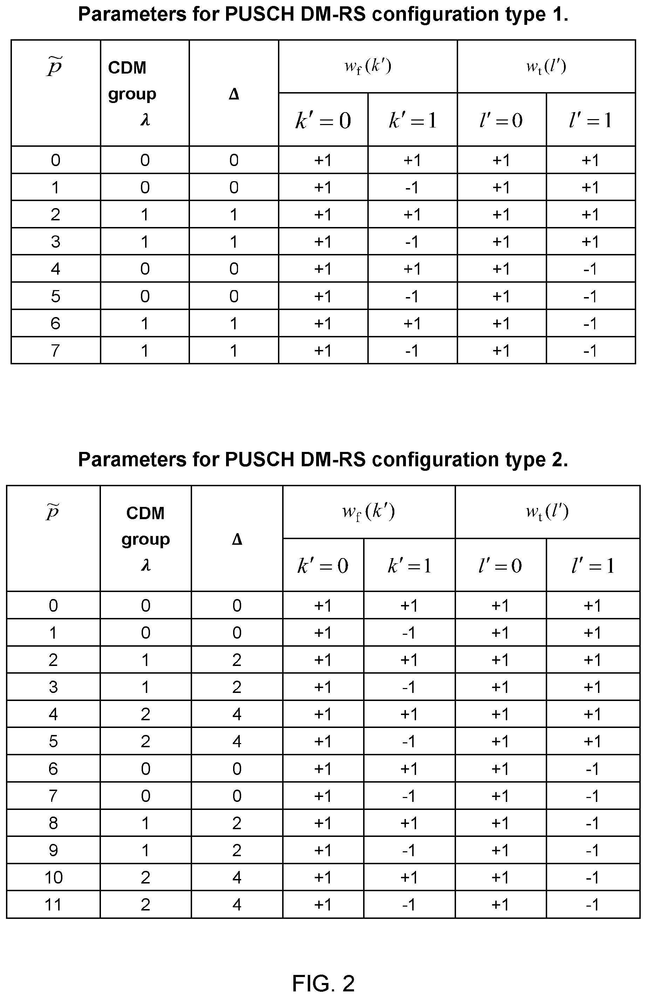

In parameters for a PUSCH DMRS (existing DMRS port table, Rel-15 DMRS port table, FIG. 2), DMRS ports 0 to 7 and DMRS ports 0 to 11 can be used for DMRS configuration type 1 and DMRS configuration type 2, respectively.

### (Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), different DMRS ports / CSI-RS ports may be configured for each layer. For multi user MIMO (MU-MIMO), different DMRS ports / CSI-RS ports may be configured for each layer in one UE and for each UE.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol

### DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2+2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) w_{f}(k') for an FD-OCC and a parameter (which may be referred to as a sequence element or the like) wₜ(l') for a TD-OCC.

Both of the TD-OCC and FD-OCC for the DMRS of Rel-15 NR correspond to an OCC of a sequence length (which may be referred to as an OCC length)=2. Thus, respective possible values of k' and l' described above are both 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two Rel-15 DMRS port tables for PDSCH (association between antenna port indices (numbers) and parameters) described above correspond to respective DMRS configuration types 1 and 2. Note that p and Δ indicate an antenna port number and a parameter for shifting (offsetting) a frequency resource, respectively.

For example, {w_{f}(0), w_{f}(1)} = {+1, +1} and {w_{f}(0), w_{f}(1)} = {+1, -1} are applied to antenna ports 1000 and 1001, respectively, thereby orthogonalizing the antenna ports by using an FD-OCC.

Δ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

{wₜ(0), wₜ(1)} = {+1, +1} and {wt(0), wₜ(1)} = {+1, -1} are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.
{Case 1} Single-symbol DMRS of DMRS configuration type 1
   A total number of DMRS ports is 2 (with comb/FDM) x 2 (with FD OCC) = 4 ports.
{Case 2} Double-symbol DMRS of DMRS configuration type 1
   A total number of DMRS ports is 2 (with comb/FDM) x 2 (with FD OCC) x 2 (with TD OCC) = 8 ports.
{Case 3} Single-symbol DMRS of DMRS configuration type 2
   A total number of DMRS ports is 3 (with FDM) x 2 (with FD OCC) = 6 ports.
{Case 4} Double-symbol DMRS of DMRS configuration type 2
   A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

### <Option 1>

- Introduction of a new OCC having a length (for example, 4 or 6) greater than that of an existing OCC.

In Option 1, items to be studied include a possibility of performance degradation, a possibility of scheduling restriction, backward compatibility, and the like in a case of a large delay spread.

### <Option 2>

- Use of a TD-OCC over a plurality of non-consecutive DMRS symbols (for example, a TD-OCC over a front-loaded DMRS / additional DMRS) .

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

### <Option 3>

- Increasing the number of CDM groups (for example, increasing the number of combs / times of FDM).

In Option 3, items to be studied include a possibility of performance degradation, backward compatibility, and the like in a case of a large delay spread.

### <Option 4>

- Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

### <Option 5>

- Use of a TD-OCC over a plurality of non-consecutive DMRS symbols, the TD-OCC being combined with an FD-OCC/FDM (reusing additional DMRS symbols to improve channel estimation performance).

In Option 5, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

In Option 1, a new FD-OCC for a PDSCH/PUSCH DMRS may follow at least one of some of the following options for DMRS enhanced type 1.
<<Option 1-1>> A new FD-OCC having a length of 6 is applied to six REs of a DMRS in one PRB in one CDM group.
<<Option 1-2>> A new FD-OCC having a length of 4 is applied to four REs of a DMRS in one PRB or across a plurality of consecutive PRBs in one CDM group.

In Option 1, regarding a new FD-OCC for a PDSCH/PUSCH DMRS, a new FD-OCC having a length of 4 is applied to four REs of a DMRS in one PRB in one CDM group for DMRS enhanced type 2. For DMRS enhanced type 2, a new FD-OCC having a length of 6 may be supported.

In the present disclosure, existing FD-OCC #0 may be [+1 +1], and existing FD-OCC #1 may be [+1 -1].

The new FD-OCC may be one of some of the following OCCs.

### [OCC 1-1]

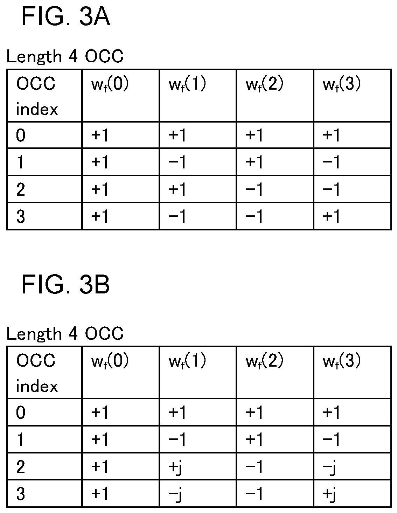

OCC having a length of 4 based on a Walsh matrix (sequence) having four rows and four columns. As in the example of FIG. 3A, four sequences are obtained for OCC index i = {0, 1, 2, 3}.

### [OCC 1-2]

OCC having a length of 4 based on a cyclic shift. As in the example of FIG. 3B, four sequences are obtained by using cyclic shifts {i·0, i·π/2, i·π, i·3π/2} for OCC indices i = {0, 1, 2, 3}.

In OCC 1-1 and OCC 1-2, the first part and the last part of OCCs #0 and #1 having a length of 4 (OCCs corresponding to OCC indices 0 and 1) are respectively the same as OCCs #0 and #1 having a length of 2 (OCCs corresponding to OCC indices 0 and 1).

In the present disclosure, an OCC (FD-OCC/TD-OCC) corresponding to OCC index i may be referred to as OCC #i.

A part of a plurality of sequences of a new FD-OCC may be associated with Rel-15 DMRS port indices.

When an FD-OCC having a length of 2 is used, a Rel-15 DMRS port table for DMRS configuration type 1 and a Rel-15 DMRS port table for DMRS configuration type 2 may be used.

Enhanced DMRS configuration type 1 (DMRS enhanced type 1, DMRS enhanced type = 1, DMRS eType 1) uses frequency domain allocation of DMRS configuration type 1 (DMRS type 1, DMRS type = 1, DMRS Type 1) and a new FD-OCC. Enhanced DMRS configuration type 2 (DMRS enhanced type 2, DMRS enhanced type = 2, DMRS eType 2) uses frequency domain allocation of DMRS configuration type 2 (DMRS type 2, DMRS type = 2, DMRS Type 2) and a new FD-OCC.

In the present disclosure, DMRS configuration type 1, DMRS type 1, DMRS type = 1, and DMRS Type 1 may be interchangeably interpreted. In the present disclosure, DMRS configuration type 2, DMRS type 2, DMRS type = 2, and DMRS Type 2 may be interchangeably interpreted. In the present disclosure, enhanced DMRS configuration type 1, DMRS enhanced type 1, DMRS enhanced type = 1, and DMRS eType 1 may be interchangeably interpreted. In the present disclosure, enhanced DMRS configuration type 2, DMRS enhanced type 2, DMRS enhanced type = 2, and DMRS eType 2 may be interchangeably interpreted.

In the present disclosure, a maximum DMRS length and maxLength may be interchangeably interpreted.

In the present disclosure, an existing FD-OCC, an FD-OCC having a length of 2, a Rel-15 FD-OCC, and w_{f}(k') may be interchangeably interpreted. In each embodiment, a new FD-OCC, an FD-OCC longer than 2, a Rel-18 FD-OCC, and w_{f}(k') may be interchangeably interpreted.

A Rel-18 DMRS port table may indicate DMRS ports (p is 0 or greater) corresponding to the new FD-OCC. At least a part of values of p in the Rel-18 DMRS port table may overlap values of p in the Rel-15 DMRS port table. When use of the new FD-OCC is configured/indicated, the UE may use the Rel-18 DMRS port table, whereas when use of the new FD-OCC is not configured/indicated, the UE may use the Rel-15 DMRS port table.

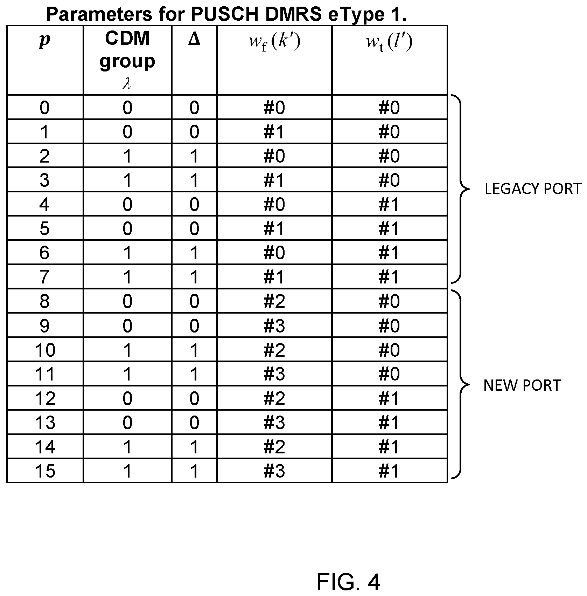

The Rel-18 DMRS port table for DMRS enhanced type 1 may be a DMRS port table of FIG. 4. As in the example, DMRS port indices (DMRS ports 0 to 7) the same as those of the Rel-15 DMRS ports may be used for the DMRS ports with new FD-OCCs #0 and 1. DMRS port indices (DMRS ports 8 to 15) different from those of the Rel-15 DMRS ports may be used for the DMRS ports with new FD-OCCs #2 and 3.

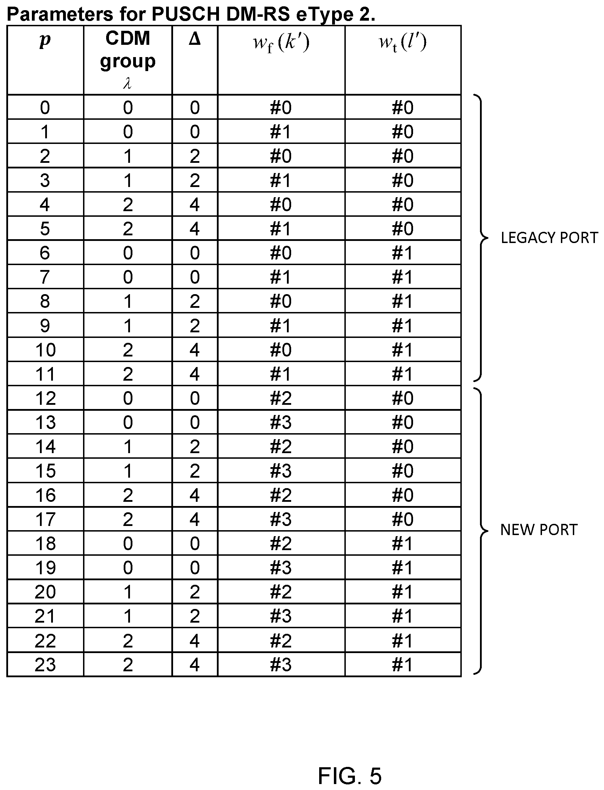

The Rel-18 DMRS port table for DMRS enhanced type 2 may be a DMRS port table of FIG. 5. As in the example, DMRS port indices (DMRS ports 0 to 11) the same as those of the Rel-15 DMRS ports may be used for the DMRS ports with new FD-OCCs #0 and 1. DMRS port indices (DMRS ports 12 to 23) different from those of the Rel-15 DMRS ports may be used for the DMRS ports with new FD-OCCs #2 and 3.

### (MU-MIMO Scheduling Restriction)

For MU-MIMO, a plurality of DMRSs for a plurality of UEs are multiplexed. The plurality of DMRSs may be subjected to CDM using different OCCs in one CDM group, or may be subjected to FDM using different subcarriers (Comb) among a plurality of CDM groups. In CDM, a problem (near-far problem) arises due to differences of distances from the base station to a plurality of UEs. In a flat fading environment, inter-symbol interference does not occur; however, in a frequency-selective fading environment, inter-symbol interference occurs, and quality is reduced. In order to prevent this, MU-MIMO scheduling restriction (existing MU-MIMO scheduling restriction) is defined.

For a PDSCH using DMRS configuration type 1, the following MU-MIMO scheduling restriction is defined.
- In DMRS configuration type 1, when the UE is scheduled with one codeword (CW) and is assigned antenna port mapping with indices {2, 9, 10, 11, 30} in an existing antenna port table for DMRS configuration type 1, or the UE is scheduled with two CWs, the UE may assume that the rest of orthogonal antenna ports are not associated with transmission of a PDSCH to another UE.

For a case in which the number of DMRS CDM groups without data being 1 and rank 1 (one DMRS port) are indicated, there may not be restriction in the same CDM group (one DMRS port of another UE may be subjected to CDM to the DMRS port of the UE). For a case in which the number of DMRS CDM groups without data being 1 and rank 2 (two DMRS ports) are indicated, all of the DMRS ports in the same CDM group are indicated, and thus DMRS ports of another UE cannot be subjected to CDM to the DMRS ports of the UE in the same CDM group. For a case in which the number of DMRS CDM groups without data being 2 and rank 3 (three DMRS ports) are indicated, three DMRS ports out of four DMRS ports in two CDM groups are indicated, and thus one DMRS port is available but one DMRS port of another UE cannot be subjected to CDM thereto. For a case in which the number of DMRS CDM groups without data being 2 and rank 4 (four DMRS ports) are indicated, all of the DMRS ports in the same CDM group are indicated, and thus DMRS ports of another UE cannot be subjected to CDM to the DMRS ports of the UE in the same CDM group.

### (Indication of Rel-18 DMRS Ports)

For indication of a Rel-18 DMRS for a PDSCH, some of the following methods are under study.

### [Method A]

A new antenna port table similar to the existing antenna port table is defined. A maximum size of the antenna port field is increased by M (M >= 0) bits. In M >= 1, a part or all except for rows of reserved values (reserved) out of the existing rows of the existing antenna port table may be copied to the new antenna port table.

### [Method B]

The existing antenna port table is reused. The size of the antenna port field in DCI is maintained. A new DCI field for a DMRS port offset indicator of M (M >= 1) bit(s) for indicating Rel-18 DMRS ports is introduced. M = 1 may be at least supported. When M = 1, and the DMRS port offset indicator field is set to 0, the DMRS ports may be the same as the DMRS ports indicated by the antenna port field in DCI format 1_1/1_2. When M = 1, and the DMRS port offset indicator field is set to 1, the DMRS ports may be DMRS ports obtained by adding X to the DMRS ports indicated by the antenna port field in DCI format 1_1/1_2. For DMRS enhanced type 1, X may be 8. For DMRS enhanced type 2, X may be 12.

### [Method C]

The existing antenna port table is reused. The size of the antenna port field in DCI is maintained. A new table for indicating Rel-18 DMRS ports including 8/16 ports or 12/24 ports is introduced. Configured time domain resource allocation (TDRA) entries may include an indication as to which DMRS port is used for scheduling.

### [Method D]

The existing antenna port table is reused. The size of the antenna port field in DCI is maintained. A new table for indicating Rel-18 DMRS ports with Rel-18 DMRS port indices is introduced. At least one DMRS port with Rel-18 DMRS port index p may be included in each row.

However, it is not clear as to whether or not the size of the antenna port field and DMRS port combinations in the existing antenna port table are reused. Unless such operation is definite, communication throughput / communication quality may deteriorate.

In view of this, the inventors of the present invention came up with the idea of operation for antenna port indication.

Embodiments according to the present disclosure will be described in detail with reference to the drawings as follows. Note that the embodiments (for example, respective cases) to be described below may each be used individually, or at least two of the embodiments may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, "having capability of ..." may be interchangeably interpreted as "supporting/reporting capability of ...."

In the present disclosure, a DMRS port, an antenna port, a port, a port number, and a port index may be interchangeably interpreted.

In the present disclosure, an RB and a PRB may be interchangeably interpreted.

In the present disclosure, OCC #i and an OCC corresponding to OCC index i may be interchangeably interpreted.

In the present disclosure, an antenna port indication table, an antenna port table, and an association between antenna port field values and parameter sets may be interchangeably interpreted. The parameter set may include at least two of the number of DMRS CDM group(s) without data, DMRS ports (numbers/indices), and the number of front-end DMRS symbols.

In the present disclosure, existing ports may be ports 0 to 7 in DMRS enhanced type 1 and ports 0 to 11 in DMRS enhanced type 2. In each embodiment, new ports may be ports 8 to 15 in DMRS enhanced type 1 and ports 12 to 23 in DMRS enhanced type 2.

### (Radio Communication Method)

Each embodiment may be applied to a PDSCH DMRS, or may be applied to a PUSCH DMRS. A PUSCH DMRS port index may be represented as p, and a PDSCH DMRS port index may be represented as p+1000.

Each embodiment may be applied to DMRS enhanced type 1, or may be applied to DMRS enhanced type 2. Each embodiment may be applied to maximum DMRS length = 1, or may be applied to maximum DMRS length = 2.

In each embodiment, a Rel-18 DMRS port being configured and DMRS enhanced type 1/2 being configured may be interchangeably interpreted.

In the antenna port table of each embodiment, values of antenna port field values, the number of DMRS CDM groups without data, and DMRS ports are examples, and other values may be defined.

In each embodiment, at least one of some of the following indications may be indicated by a new field, may be indicated by interpreting an existing field, or may be indicated together with the existing field. The existing field may be a field for TDRA/FDRA/MCS/antenna ports.
- Additional bits of an antenna port field.
- DMRS port offset indicator in Method B.
- Indication of an existing antenna port table or a new antenna port table.
- Indication of a normal antenna port table.

In each embodiment, the size of the antenna port field being not increased from the size of an existing antenna port field and increase in the size of an antenna port field being not configured may be interchangeably interpreted. In each embodiment, the size of an antenna port field being increased from the size of an existing antenna port field and increase in the size of an antenna port field being configured may be interchangeably interpreted. In each embodiment, an antenna port table used when the size of an antenna port field is not increased from the size of an existing antenna port field may be referred to as a normal antenna port table. In each embodiment, an antenna port table used when the size of an antenna port field is increased from the size of an existing antenna port field may be referred to as an enhanced antenna port table.

### <Embodiment #0>

The size of the existing antenna port field for a PDSCH is 4, 5, or 6 bits in DCI format 1_1, and is 4, 5, or 6 bits in DCI format 1_2. When the Rel-18 DMRS ports are used, the size of the antenna port field may be determined by a specification, or may be configured by a higher layer signaling. When the Rel-18 DMRS ports are used, the size of the antenna port field need not be based on the size of the antenna port table. When the Rel-18 DMRS ports are used, the size of the antenna port field/DCI need not be increased. A new indication in an RRC IE or a TDRA table may indicate a subset of the DMRS port table.

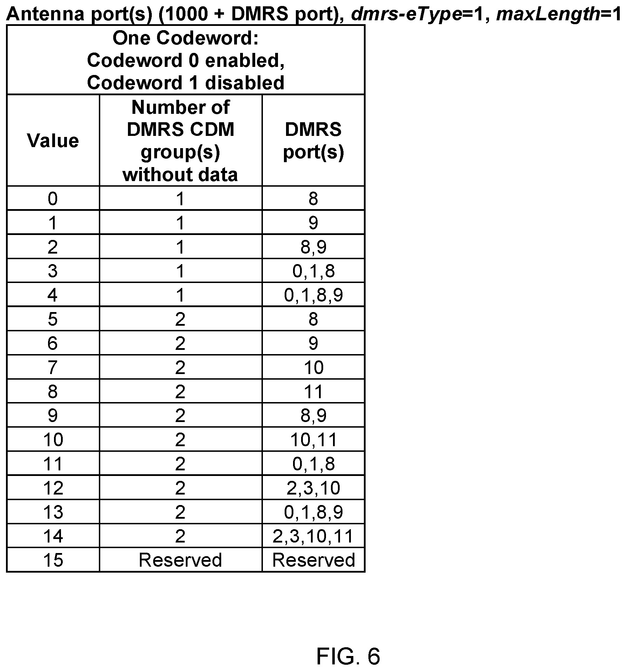

In a new antenna port table when the Rel-18 DMRS ports are used, a part or all of DMRS port combinations in the existing antenna port table may be reused. In this case, only DMRS ports out of DMRS ports 0 to 7 may be indicated for DMRS enhanced type 1, and only DMRS ports out of DMRS ports 0 to 11 may be indicated for DMRS enhanced type 2. In order to prevent DMRS overhead or complicated MU-MIMO multiplexing, as in the example of FIG. 6, up to three or four DMRS ports in the same CDM group may be indicated. For example, ports #0, #1, #8, and #9 may be indicated for DMRS enhanced type 1.

### - Embodiment #0-0

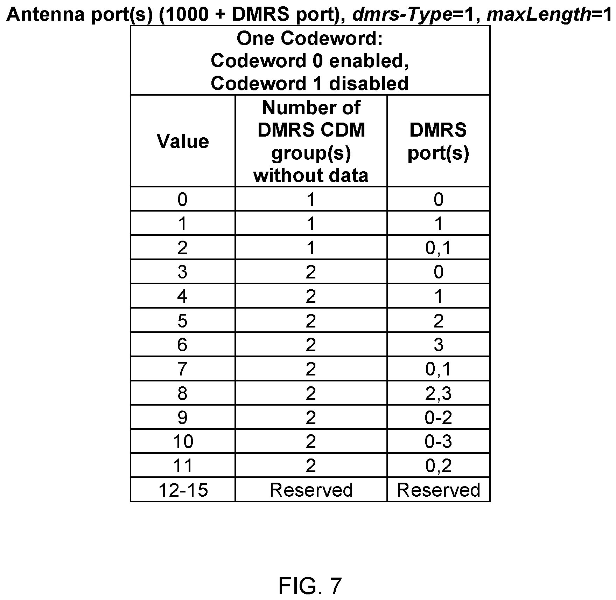

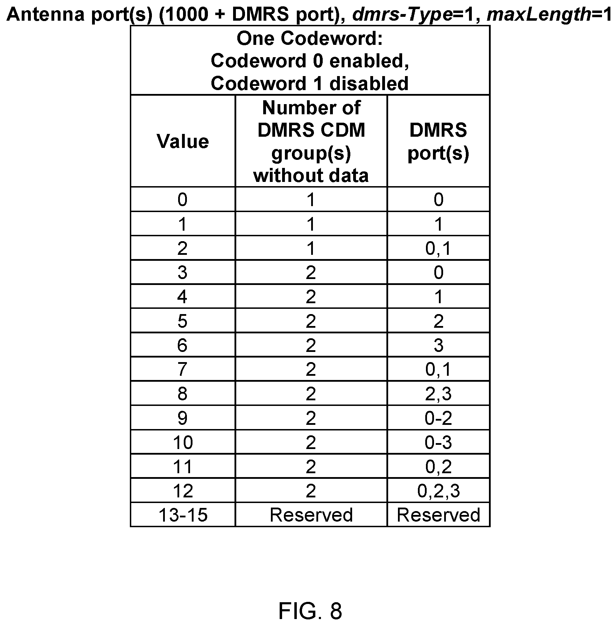

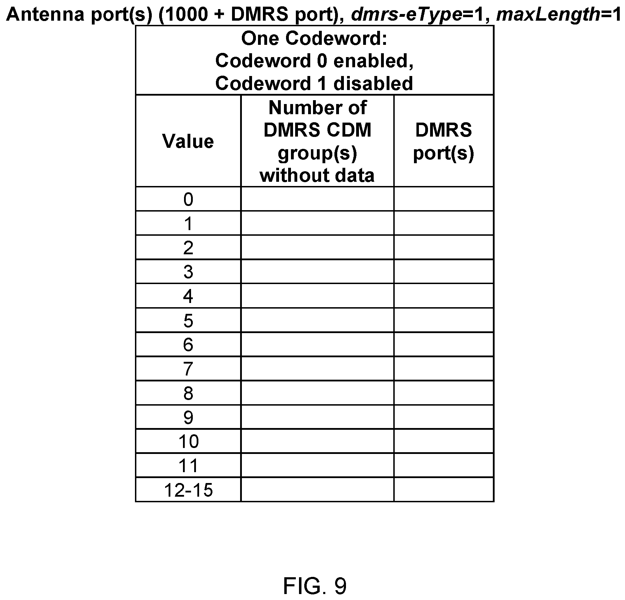

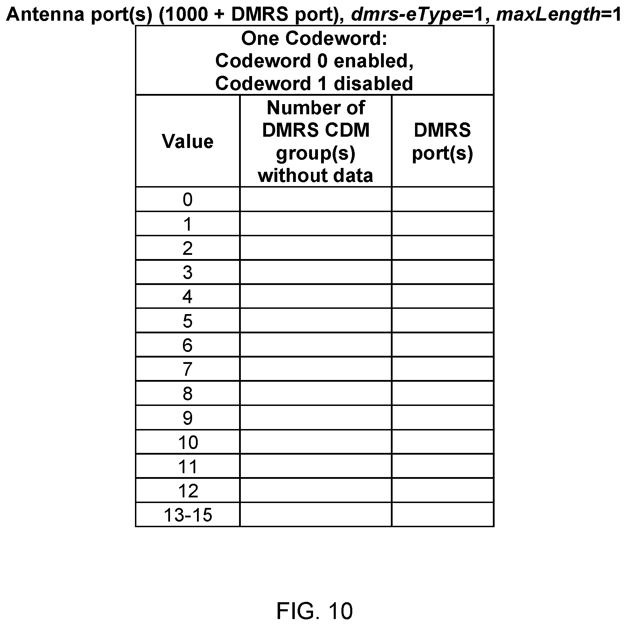

Depending on whether the Rel-18 DMRS ports are configured, the UE may switch or determine the antenna port table. When the Rel-18 DMRS ports are not configured, the UE may use the existing antenna port table as in the examples of FIG. 7 and FIG. 8. When the Rel-18 DMRS ports are configured, the UE may use the new antenna port table as in the examples of FIG. 9 and FIG. 10. One of the existing antenna port table and the new antenna port table may be configured/indicated by an RRC IE/DCI.

A new antenna port table for a combination of DMRS enhanced type {1, 2} and maximum DMRS length {1, 2} may be defined in a specification.

### - Embodiment #0-1

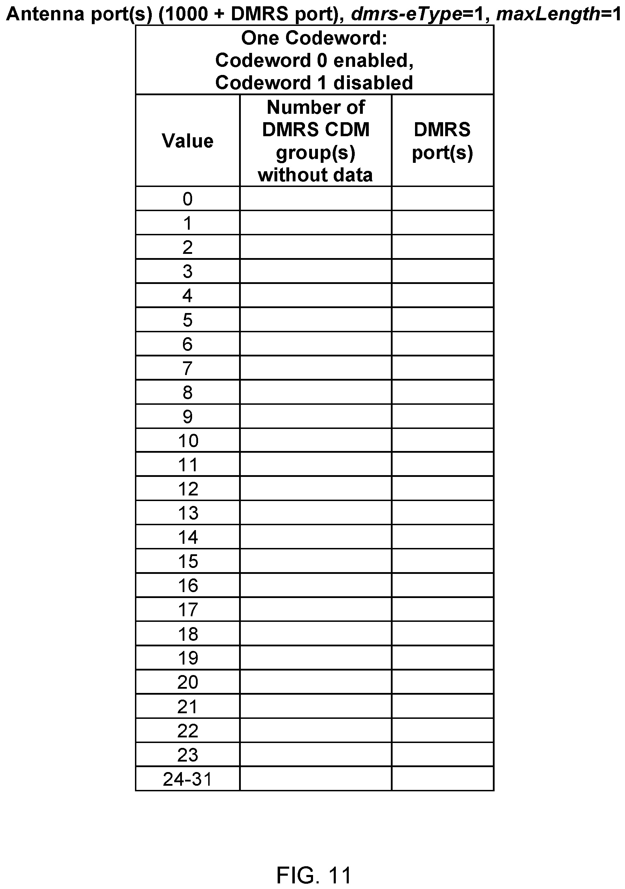

When the Rel-18 DMRS ports are configured, the UE may switch or determine at least one of the size of the antenna port field and the number of rows/content of the antenna port table, based on higher layer signaling. When increase (additional bits) in the size of the antenna port field is not configured, the UE may use an antenna port table (for example, FIG. 10 described above) corresponding to the size of the antenna port field. When increase (additional bits) in the size of the antenna port field is configured, the UE may use an antenna port table (for example, FIG. 11) corresponding to the size of the antenna port field. One of an antenna port table corresponding to no increase in the size of the antenna port field and an antenna port table corresponding to increase in the size of the antenna port field may be configured/indicated by an RRC IE/DCI.

A new antenna port table for a combination of DMRS enhanced type {1, 2} and maximum DMRS length {1, 2} may be defined in a specification.

### - Embodiment #0-2

In Method B, values of the DMRS port offset indicator field in DCI format 1_0 may be invariably 0, and values of the DMRS port offset indicator for DCI format 1_0 may be configured by higher layer signaling.

In Method B, the size of the DMRS port offset indicator field in DCI format 1_1/1_2 may be configured by higher layer signaling. The size may be configured to 0 bits. When the Rel-18 DMRS ports are configured, the size of the DMRS port offset indicator field in DCI format 1_1/1_2 may be 1 bit or more.

When the size of the DMRS port offset indicator field is 0 bits, the values of the DMRS port offset indicator may be notified by an RRC IE/DCI. For example, when the DMRS port offset indicator is binary, and a notified value is 0, the UE may consider that there is no offset for the DMRS port index, and may determine the DMRS port by using the DMRS port index indicated by the antenna port field and the antenna port table. For example, when the DMRS port offset indicator is binary, and a notified value is 1, the UE may consider that an offset for the DMRS port index is X. For DMRS enhanced type 1, X may be 8. For DMRS enhanced type 2, X may be 12. The value of X for DMRS enhanced type 1 and the value of X for DMRS enhanced type 2 may be individually notified.

When the size of the DMRS port offset indicator field is 1 bit, the values of the DMRS port offset indicator may be notified by the DMRS port offset indicator field in DCI. For example, when a value notified by the DMRS port offset indicator field is 0, the UE may consider that there is no offset for the DMRS port index, and may determine the DMRS port by using the DMRS port index indicated by the antenna port field and the antenna port table. For example, when a value notified by the DMRS port offset indicator field is 1, the UE may consider that an offset for the DMRS port index is X. For DMRS enhanced type 1, X may be 8. For DMRS enhanced type 2, X may be 12.

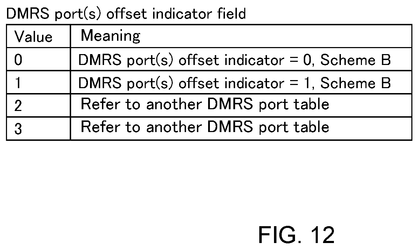

When the size of the DMRS port offset indicator field is 2 bits, the values of the DMRS port offset indicator may be notified by the DMRS port offset indicator field in DCI. As in the example of FIG. 12, for example, when a value notified by four values of the DMRS port offset indicator field is 0, the UE may consider that there is no offset for the DMRS port index, and may determine the DMRS port by using the DMRS port index indicated by the antenna port field and the antenna port table. For example, when a value notified by four values of the DMRS port offset indicator field is 1, the UE may consider that an offset for the DMRS port index is X. For DMRS enhanced type 1, X may be 8. For DMRS enhanced type 2, X may be 12. For example, when a value notified by four values of the DMRS port offset indicator field is 2 or 3, the UE may determine the DMRS ports by using another antenna port table (new antenna port table), without using Method B (existing antenna port table). In Method B, as in DMRS ports #0, #1, #8, and #9 for DMRS enhanced type 1, DMRS port combinations using both of FD-OCC indices 0 and 1 and FD-OCC indices 2 and 3 cannot be indicated. In this manner, the new antenna port table may include DMRS port combinations using both of FD-OCC indices 0 and 1 and FD-OCC indices 2 and 3.

According to the present embodiment, the UE can be appropriately indicated with Rel-18 DMRS ports for a PDSCH.

### <Embodiment #1>

The present embodiment relates to an antenna port indication for a PDSCH.

In Embodiment #0-1, when the size of the antenna port field is not increased from the size of the existing antenna port field, the DMRS port combination indicated by the antenna port field/antenna port table may be one of the following combinations.
- Combination including only existing ports.
- Combination including only new ports.

The example of the antenna port table of FIG. 6 described above does not include DMRS port combinations of only existing ports, and thus the UE using the Rel-18 DMRS ports cannot use DMRS port combinations of only existing ports. MU-MIMO using the Rel-15 DMRS ports and the Rel-18 DMRS ports (FD-OCCs having different lengths) in the same CDM group may be impracticable. For example, DMRS ports #0, #1, #8, and #9 for DMRS enhanced type 1 cannot be multiplexed even among a plurality of UEs, and the capacity of the DMRS ports cannot be improved.

In Embodiment #0-1, when the size of the antenna port field is not increased from the size of the existing antenna port field, the antenna port table may include at least one DMRS port combination including new ports without including a DMRS port combination including only existing ports, similarly to FIG. 6 described above. In Embodiment #0-1, when the size of the antenna port field is increased from the size of the existing antenna port field, the antenna port table may include a DMRS port combination including only existing ports. In this case, the DMRS port combination including only existing ports cannot be flexibly indicated without changing the size of the antenna port field.

In Embodiment #0-1, when the size of the antenna port field is not increased from the size of the existing antenna port field, the antenna port table may include a DMRS port combination including both of existing ports and new ports in the same CDM group. The DMRS port combination may be a DMRS port combination of rank 3 or higher not included in the existing antenna port table for maximum DMRS length = 1. In this case, a case of multiplexing a plurality of UEs by using the same CDM group can be reduced, and the number of CDM groups/number of DMRS symbols to be used is reduced, and thus DMRS overhead can be reduced, and throughput for the UE can be improved.

In Embodiment #0-1, when the size of the antenna port field is increased from the size of the existing antenna port field, the DMRS port combination indicated by the antenna port field/antenna port table may be one of the following combinations.
- Combination including only existing ports.
- Combination including only new ports.

In Embodiment #0-1, when the size of the antenna port field is increased from the size of the existing antenna port field, the antenna port table may include a DMRS port combination including both of existing ports and new ports in the same CDM group. The DMRS port combination may be a DMRS port combination of rank 3 or higher not included in the existing antenna port table for maximum DMRS length = 1. In this case, a case of multiplexing a plurality of UEs by using the same CDM group can be reduced, and the number of CDM groups/number of DMRS symbols to be used is reduced, and thus DMRS overhead can be reduced, and throughput for the UE can be improved.

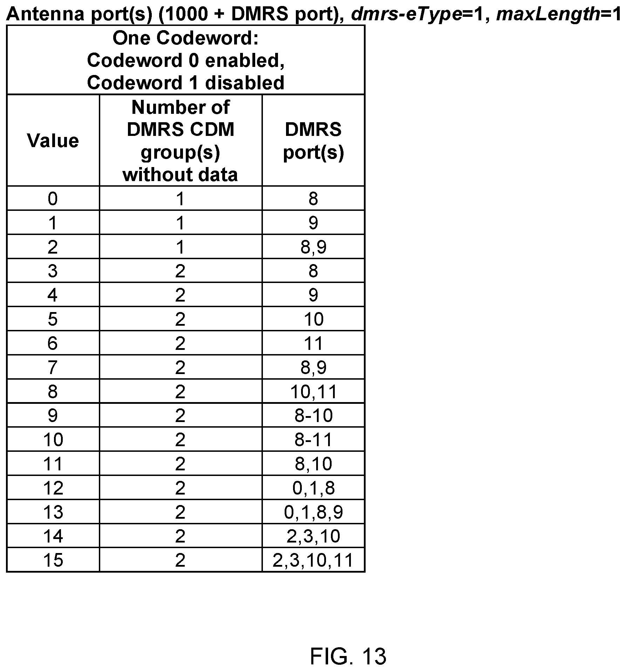

FIG. 13 shows an example of a normal antenna port table when increase in the size of the antenna port field (the size of the antenna port field is 4 bits) is not configured for DMRS enhanced type = 1 and maximum DMRS length = 1. The normal antenna port table includes a DMRS port combination including only new ports and a DMRS port combination including both of existing ports and new ports.

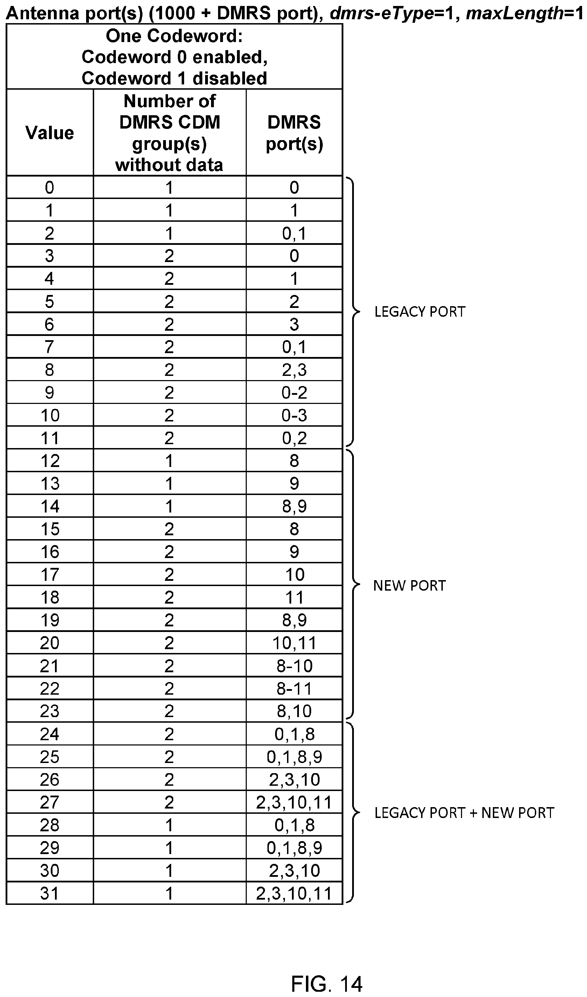

FIG. 14 shows an example of an enhanced antenna port table when increase in the size of the antenna port field by 1 bit (the size of the antenna port field is 5 bits) is configured for DMRS enhanced type = 1 and maximum DMRS length = 1. The enhanced antenna port table includes a DMRS port combination including only existing ports, a DMRS port combination including only new ports, and a DMRS port combination including both of existing ports and new ports. The DMRS port combination including only new ports can be obtained by adding X (= 8) to the DMRS port index of the DMRS port combination including only existing ports. The DMRS port combination including both of existing ports and new ports is rank 3 or 4, and includes only DMRS ports in the same CDM group. The number of CDM groups for antenna port field value 31 may be 1, or may be 2. When the number of CDM groups is 1, unused CDM groups can be used for data of the same UE, and thus throughput for the UE can be improved, but another CDM group cannot be assigned to another UE. When the number of CDM groups is 2, unused CDM groups can be used for the DMRS of another UE, and thus cell capacity can be improved.

Parameter sets of all or a part of rows of the normal antenna port table may be parameter sets of a part of rows of the enhanced antenna port table. In the examples of FIG. 13 and FIG. 14 described above, the parameter sets of rows corresponding to antenna port field values 0 to 15 in the normal antenna port table are the same as the parameter sets of rows corresponding to antenna port field values 12 to 27 in the enhanced antenna port table.

Rows (extracted part) to be applied to the normal antenna port table in the content of rows (entries) of the enhanced antenna port table may be defined in a specification, or may be configured by higher layer signaling. When an extracted part is configured, the extracted part may be notified by a row number/start row number/end row number/number of rows, or may be determined based on an increase amount in the size of the antenna port field.

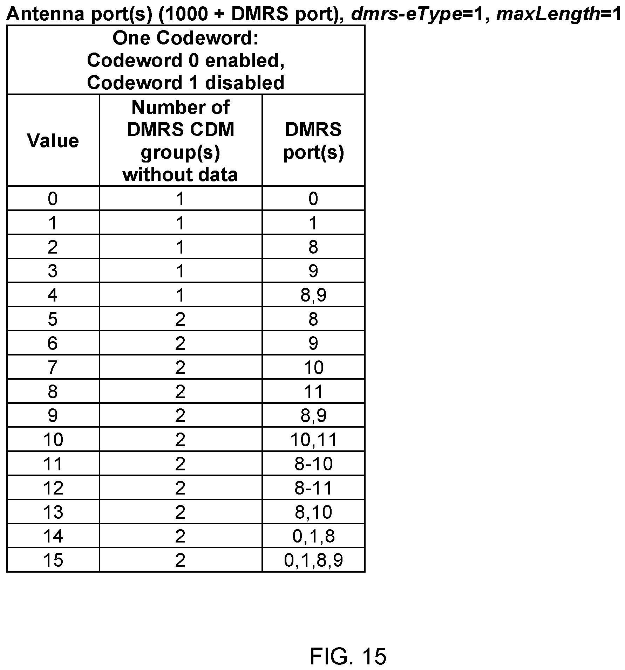

For DCI formats 1_1 and 1_2, the extracted part may be notified individually, or the extracted part may be notified in common. For each table for the DMRS enhanced type/maximum DMRS length, the extracted part may be notified by a bitmap. FIG. 15 shows another example of a normal antenna port table for DMRS enhanced type = 1 and maximum DMRS length = 1. In the present example, the extracted part corresponds to antenna port field values 0, 1, and 13 to 25 in the enhanced antenna port table.

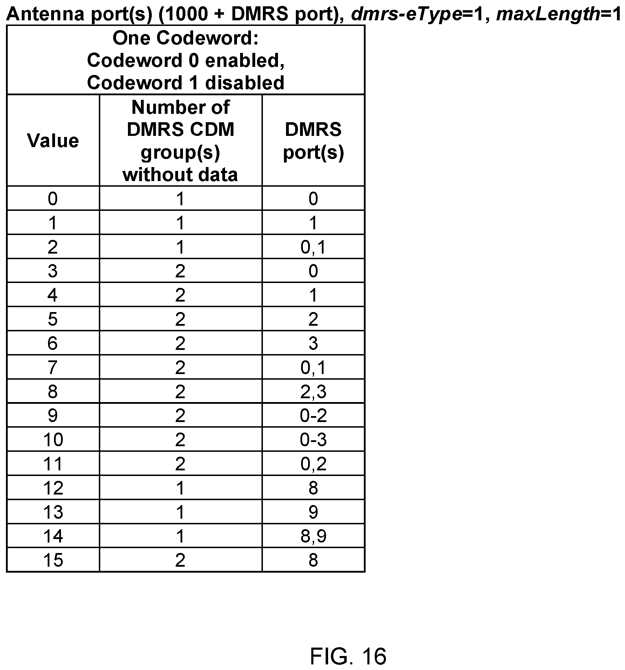

A plurality of normal antenna port tables may be defined in a specification, or may be configured by higher layer signaling. One normal antenna port table out of a plurality of normal antenna port tables may be notified or switched by an RRC IE/MAC CE/DCI. When the normal antenna port table is notified by DCI, the normal antenna port table may be indicated by a new field or an existing field in the DCI. The existing field may include a field for TDRA/frequency domain resource allocation (FDRA)/MCS/antenna ports. The DMRS ports can be flexibly indicated without increasing the size of the antenna port field. FIG. 16 shows an example of normal antenna port table #1 for DMRS enhanced type = 1 and maximum DMRS length = 1. The parameter sets of rows corresponding to antenna port field values 0 to 15 in normal antenna port table #1 are the same as the parameter sets of rows corresponding to antenna port field values 0 to 15 in the enhanced antenna port table. Normal antenna port table #2 may be similar to that of FIG. 15 described above. Normal antenna port table #1 may be notified to UE #1, normal antenna port table #2 may be notified to UE #2, existing ports may be indicated to UE #1, and new ports may be indicated to UE #2. In this case, MU-MIMO between existing ports and new ports can be implemented. Each of UEs #1 and #2 can estimate a channel by assuming a new FD-OCC having a length of 4.

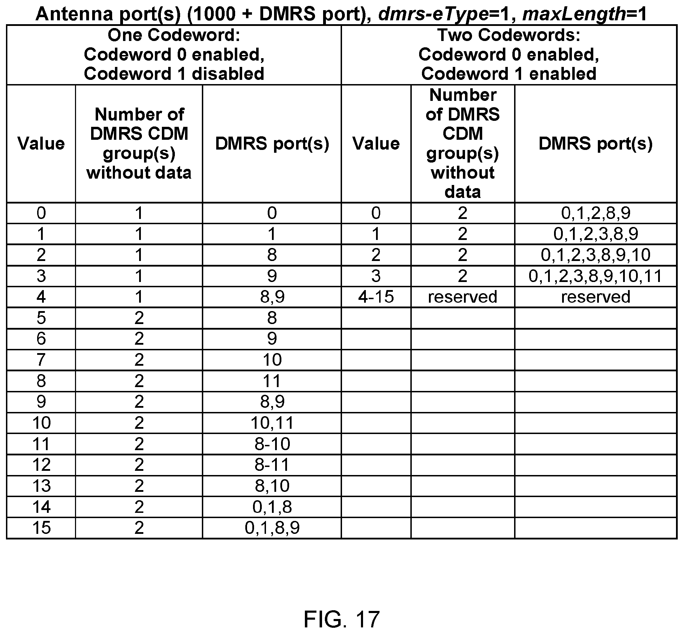

For DMRS enhanced type = 1 and maximum DMRS length = 1, a rank greater than 4 may be indicated. In the antenna port table in which two CWs and a rank greater than 4 are available, the part of one CW may be the content of the antenna port table in each embodiment. FIG. 17 shows an example of an antenna port table for DMRS enhanced type = 1 and maximum DMRS length = 1. The parameter sets of rows for one CW of the present example are similar to those of FIG. 15 described above. For two CWs of the present example, any one of {2, 3, 10, 11} may be used instead of 2 in DMRS port combination {0, 1, 2, 8, 9}. For two CWs of the present example, any two of {2, 3, 10, 11} may be used instead of {2, 3} in DMRS port combination {0, 1, 2, 3, 8, 9}. For two CWs of the present example, any three of {2, 3, 10, 11} may be used instead of {2, 3, 10} in DMRS port combination {0, 1, 2, 3, 8, 9, 10}. Two CDM groups are assigned to one UE, and thus MU-MIMO may be impracticable. The UE may assume that other DMRS ports are not assigned to another UE.

According to the present embodiment, the UE can be appropriately indicated with Rel-18 DMRS ports for a PDSCH.

### <Embodiment #2>

The present embodiment relates to an antenna port indication for a PUSCH.

For indication of a Rel-18 DMRS for a PUSCH, one of some of the following methods may be used.

### [Method A]

A new antenna port table similar to the existing antenna port table is defined. A maximum size of the antenna port field is increased by M (M >= 0) bits. In M >= 1, a part or all except for rows of reserved values (reserved) out of the existing rows of the existing antenna port table may be copied to the new antenna port table.

### [Method B]

The existing antenna port table is reused. The size of the antenna port field in DCI is maintained. A new DCI field for a DMRS port offset indicator of M (M >= 1) bit(s) for indicating Rel-18 DMRS ports is introduced. M = 1 may be at least supported. When M = 1, and the DMRS port offset indicator field is set to 0, the DMRS ports may be the same as the DMRS ports indicated by the antenna port field in DCI format 1_1/1_2. When M = 1, and the DMRS port offset indicator field is set to 1, the DMRS ports may be DMRS ports obtained by adding X to the DMRS ports indicated by the antenna port field in DCI format 1_1/1_2. For DMRS enhanced type 1, X may be 8. For DMRS enhanced type 2, X may be 12.

### [Method C]

The existing antenna port table is reused. The size of the antenna port field in DCI is maintained. A new table for indicating Rel-18 DMRS ports including 8/16 ports or 12/24 ports is introduced. Configured time domain resource allocation (TDRA) entries may include an indication as to which DMRS port is used for scheduling.

### [Method D]

The existing antenna port table is reused. The size of the antenna port field in DCI is maintained. A new table for indicating Rel-18 DMRS ports with Rel-18 DMRS port indices is introduced. At least one DMRS port with Rel-18 DMRS port index p may be included in each row.

Embodiment #1 may be applied to a PUSCH.

The antenna port table for maximum DMRS length = 1 in Embodiment #A may be applied to a PUSCH. Parameter sets of a part of rows of the antenna port table for maximum DMRS length = 2 may be parameter sets of a part or all of rows of the antenna port table for maximum DMRS length = 1.

Embodiment #0 may be applied to a PUSCH with the following change.

### - Embodiment #2-0-0

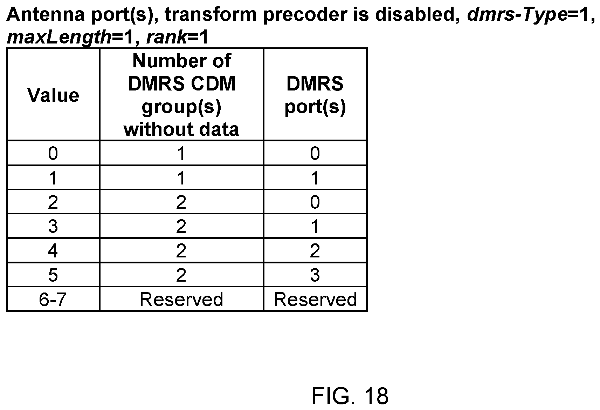

Depending on whether the Rel-18 DMRS ports are configured, the UE may switch or determine the antenna port table. When the Rel-18 DMRS ports are not configured, the UE may use the existing antenna port table. FIG. 18 shows an example of an existing antenna port table for the tranform precoder being disabled, DMRS enhanced type = 1, maximum DMRS length = 1, and rank = 1 when Rel. 18 is not configured.

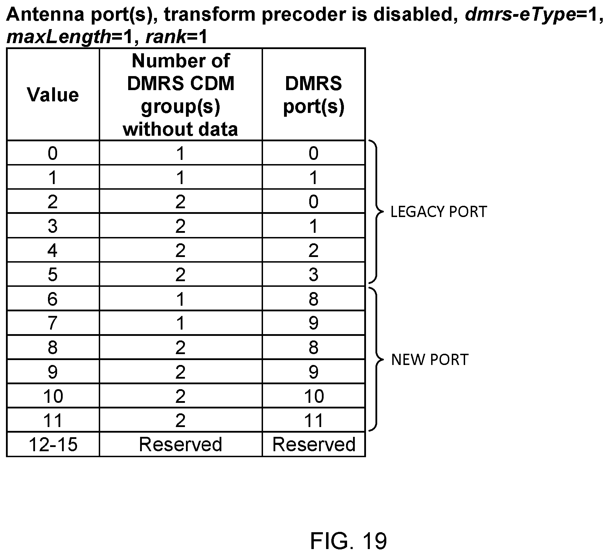

When the Rel-18 DMRS ports are configured, the UE may use the new antenna port table. A new antenna port table for a combination of DMRS enhanced type {1, 2} and maximum DMRS length {1, 2} may be defined in a specification. FIG. 19 shows an example of a new antenna port table (enhanced antenna port table) for the tranform precoder being disabled, DMRS enhanced type = 1, maximum DMRS length = 1, and rank = 1 when Rel. 18 is configured. In the present example, existing ports are associated with antenna port field values 0 to 5. In the present example, new ports are associated with antenna port field values 6 to 11. In the present example, the new ports are DMRS ports obtained by adding X (= 8) to the existing ports.

One of the existing antenna port table and the new antenna port table may be configured/indicated by an RRC IE/DCI.

### - Embodiment #2-0-1

When the Rel-18 DMRS ports are configured, the UE may switch or determine at least one of the size of the antenna port field and the number of rows/content of the antenna port table, based on higher layer signaling. When increase (additional bits) in the size of the antenna port field is not configured, the UE may use an antenna port table corresponding to the size of the antenna port field. When increase (additional bits) in the size of the antenna port field is configured, the UE may use an antenna port table corresponding to the size of the antenna port field. One of an antenna port table corresponding to no increase in the size of the antenna port field and an antenna port table corresponding to increase in the size of the antenna port field may be configured/indicated by an RRC IE/DCI. An antenna port table for a combination of DMRS enhanced type {1, 2} and maximum DMRS length {1, 2} may be defined in a specification.

### - Embodiment #2-0-2

In Method B, values of the DMRS port offset indicator field in DCI format 0_0 may be invariably 0, and values of the DMRS port offset indicator for DCI format 0_0 may be configured by higher layer signaling.

In Method B, the size of the DMRS port offset indicator field in DCI format 0_1/0_2 may be configured by higher layer signaling. The size may be configured to 0 bits. When the Rel-18 DMRS ports are configured, the size of the DMRS port offset indicator field in DCI format 0_1/0_2 may be 1 bit or more.

When the size of the DMRS port offset indicator field is 0 bits, the values of the DMRS port offset indicator may be notified by an RRC IE/DCI. For example, when the DMRS port offset indicator is binary, and a notified value is 0, the UE may consider that there is no offset for the DMRS port index, and may determine the DMRS port by using the DMRS port index indicated by the antenna port field and the antenna port table. For example, when the DMRS port offset indicator is binary, and a notified value is 1, the UE may consider that an offset for the DMRS port index is X. For DMRS enhanced type 1, X may be 8. For DMRS enhanced type 2, X may be 12. The value of X for DMRS enhanced type 1 and the value of X for DMRS enhanced type 2 may be individually notified.

When the size of the DMRS port offset indicator field is 1 bit, the values of the DMRS port offset indicator may be notified by the DMRS port offset indicator field in DCI. For example, when a value notified by the DMRS port offset indicator field is 0, the UE may consider that there is no offset for the DMRS port index, and may determine the DMRS port by using the DMRS port index indicated by the antenna port field and the antenna port table. For example, when a value notified by the DMRS port offset indicator field is 1, the UE may consider that an offset for the DMRS port index is X. For DMRS enhanced type 1, X may be 8. For DMRS enhanced type 2, X may be 12.

When the size of the DMRS port offset indicator field is 2 bits, the values of the DMRS port offset indicator may be notified by the DMRS port offset indicator field in DCI. As in the example of FIG. 12 described above, for example, when a value notified by four values of the DMRS port offset indicator field is 0, the UE may consider that there is no offset for the DMRS port index, and may determine the DMRS port by using the DMRS port index indicated by the antenna port field and the antenna port table. For example, when a value notified by four values of the DMRS port offset indicator field is 1, the UE may consider that an offset for the DMRS port index is X. For DMRS enhanced type 1, X may be 8. For DMRS enhanced type 2, X may be 12. For example, when a value notified by four values of the DMRS port offset indicator field is 2 or 3, the UE may determine the DMRS ports by using another antenna port table (new antenna port table), without using Method B (existing antenna port table). In Method B, as in DMRS ports #0, #1, #8, and #9 for DMRS enhanced type 1, DMRS port combinations using both of FD-OCC indices 0 and 1 and FD-OCC indices 2 and 3 cannot be indicated. In this manner, the new antenna port table may include DMRS port combinations using both of FD-OCC indices 0 and 1 and FD-OCC indices 2 and 3.

### - Embodiment #2-1

Cases in which the size of the antenna port field needs to be increased are limited. Whether the size of the antenna port field is increased from the size of the existing antenna port field may be configured by higher layer signaling. Whether the normal antenna port table or the enhanced antenna port table is used may be configured by higher layer signaling.

When the transform precoder is disabled, DMRS type = 1, and maximum DMRS length = 1, the size of the existing antenna port field is 3 bits. Only in a case of rank 1, for the antenna port field, 3 bits are insufficient and 4 bits are required. In order to enable indication of all the rows, the size of the antenna port field may be increased to 4 bits. The size of the antenna port field for rank 1 may be 4 bits, and the size of the antenna port field for ranks 2 to 8 may be 3 bits. In this case, whether rank 1 is used or ranks 2 to 8 are used may be (semi-statically) configured by higher layer signaling.

Here, a case of DMRS enhanced type = 1 and maximum DMRS length = 1 will be described. Here, although an example in which the size of the antenna port field is not increased from the size of the existing antenna port field is shown, the size of the antenna port field is not limited to this, and may be increased from the size of the existing antenna port field by m bits.

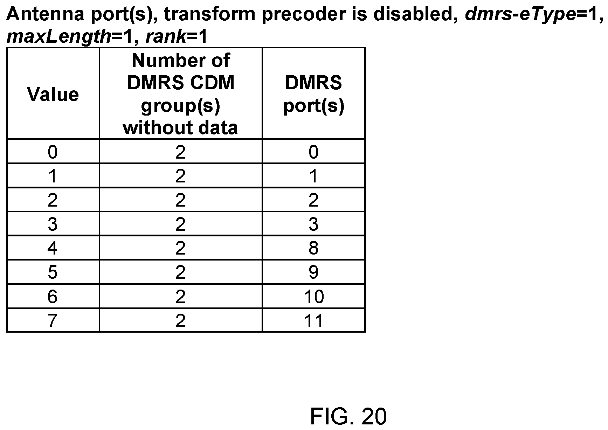

As in the example of FIG. 20, the normal antenna port table for rank 1 may be defined. In the present example, the normal antenna port table includes only a part of the new antenna port table (enhanced antenna port table) of FIG. 19 described above. When the Rel-18 DMRS ports are used to increase the number of UEs multiplexed in MU-MIMO, as in the normal antenna port table of the present example, only number of CDM groups = 2 may be included without including number of CDM groups = 1.

Both of the enhanced antenna port table when the size of the antenna port field is 4 bits and the normal antenna port table when the size of the antenna port field is 3 bits are defined in a specification, and which antenna port table is used may be configured by higher layer signaling. Only the normal antenna port table may be defined in a specification, and switching/configuration between the normal antenna port table and the enhanced antenna port table need not be performed.

When the transform precoder is disabled, DMRS type 1 is used, and maximum DMRS length = 2, the size of the existing antenna port field is 4 bits. In this case, the normal antenna port table and the enhanced antenna port table may be defined in a specification, or only the normal antenna port table may be defined in a specification.

An antenna port table for at least one combination of DMRS enhanced type {1, 2}, maximum DMRS length {1, 2}, and ranks 1 to 8 may be defined in a specification.

Depending on a combination of DMRS enhanced type {1, 2}, maximum DMRS length {1, 2}, and ranks 1 to 8, whether or not the size of the antenna port field is increased may be determined. For example, the size of the antenna port field may not be increased from the size of the existing antenna port field for DMRS enhanced type 1, and the size of the antenna port field may be increased from the size of the existing antenna port field for DMRS enhanced type 2.

Parameter sets of all or a part of rows of the normal antenna port table may be the same as parameter sets of a part of rows of the enhanced antenna port table.

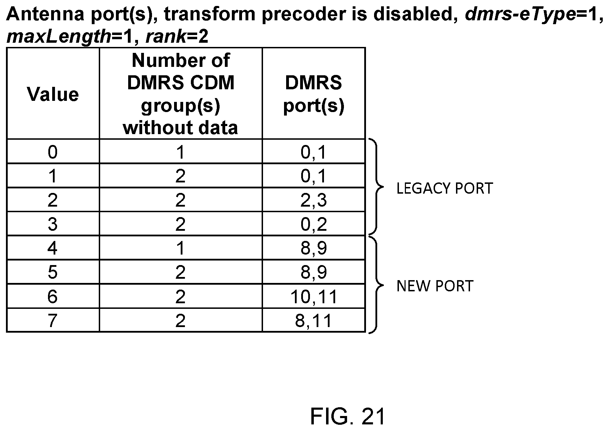

FIG. 21 shows an example of an enhanced antenna port table for the transform precoder being disabled, DMRS enhanced type = 1, maximum DMRS length = 1, and rank = 2. In the present example, antenna port field values 0 to 3 indicate existing ports, and antenna port field values 4 to 7 indicate new ports. The new ports may be DMRS port indices obtained by adding X (= 8) to the existing ports.

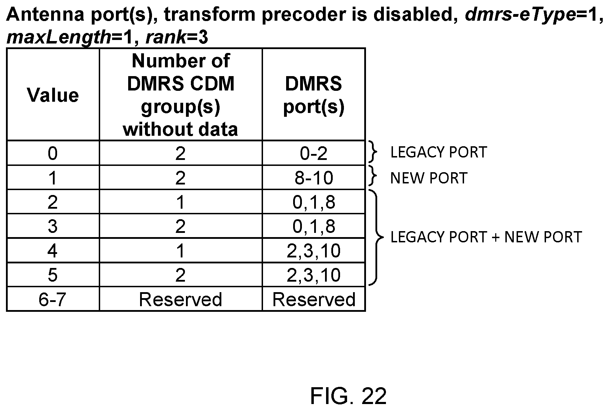

FIG. 22 shows an example of an enhanced antenna port table for the transform precoder being disabled, DMRS enhanced type = 1, maximum DMRS length = 1, and rank = 3. In the present example, antenna port field value 0 indicates existing ports, antenna port field value 1 indicates new ports, and antenna port field values 2 to 5 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 3 in one CDM group can reduce DMRS overhead. This enables number of DMRS CDM groups without data = 1, and data can be mapped to available CDM groups.

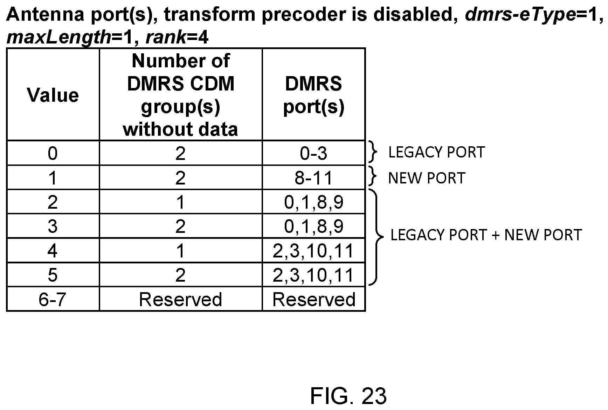

FIG. 23 shows an example of an enhanced antenna port table for the transform precoder being disabled, DMRS enhanced type = 1, maximum DMRS length = 1, and rank = 4. In the present example, antenna port field value 0 indicates existing ports, antenna port field value 1 indicates new ports, and antenna port field values 2 to 5 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 4 in one CDM group can reduce DMRS overhead. This enables number of DMRS CDM groups without data = 1, and data can be mapped to available CDM groups.

### - Embodiment #2-2

Here, a case of DMRS enhanced type = 1 and maximum DMRS length = 2 will be described. Here, although an example in which the size of the antenna port field is increased from the size of the existing antenna port field by 1 bit is shown, the size of the antenna port field is not limited to this, and may be reduced from the size of the existing antenna port field by 1 bit, or may be increased from the size of the existing antenna port field by m bits.

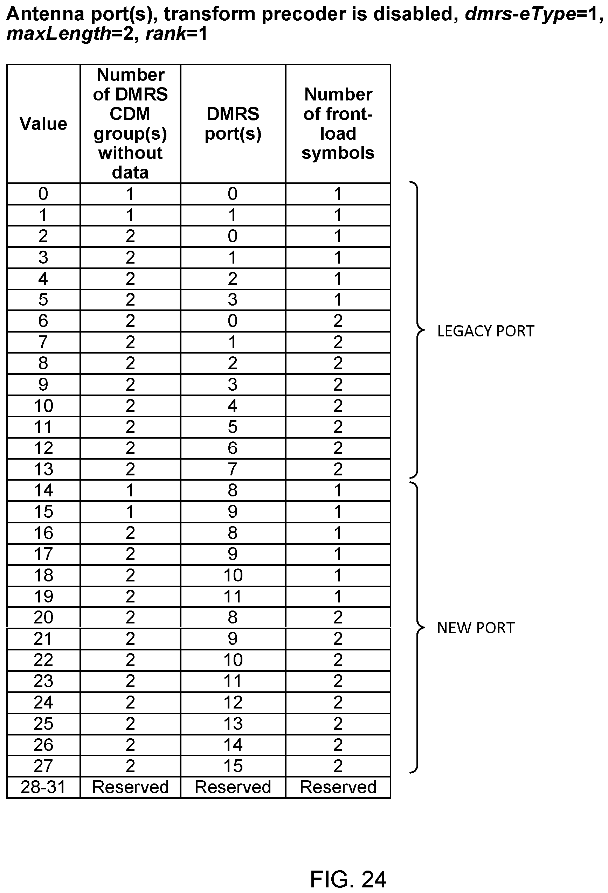

FIG. 24 shows an example of an enhanced antenna port table for the transform precoder being disabled, DMRS enhanced type = 1, maximum DMRS length = 2, and rank = 1. In the present example, antenna port field values 0 to 13 indicate existing ports, and antenna port field values 14 to 27 indicate new ports. The new ports may be DMRS port indices obtained by adding X (= 8) to the existing ports.

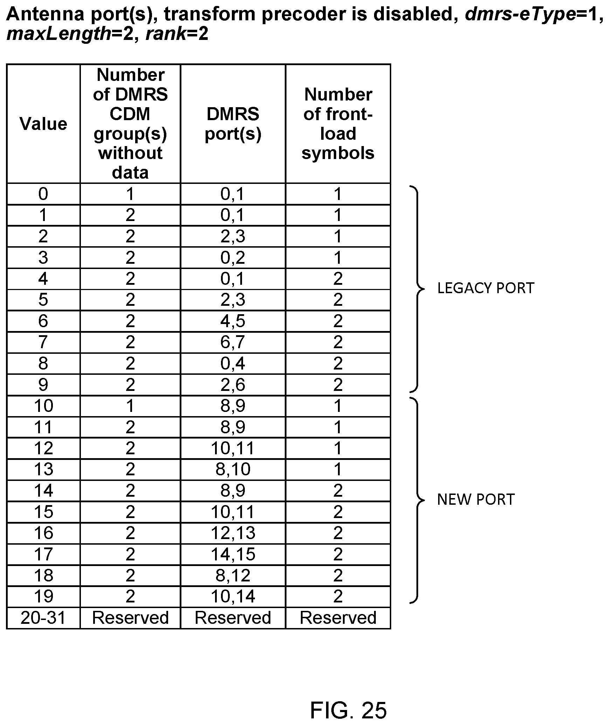

FIG. 25 shows an example of an enhanced antenna port table for the transform precoder being disabled, DMRS enhanced type = 1, maximum DMRS length = 2, and rank = 2. In the present example, antenna port field values 0 to 9 indicate existing ports, and antenna port field values 10 to 19 indicate new ports. The new ports may be DMRS port indices obtained by adding X (= 8) to the existing ports.

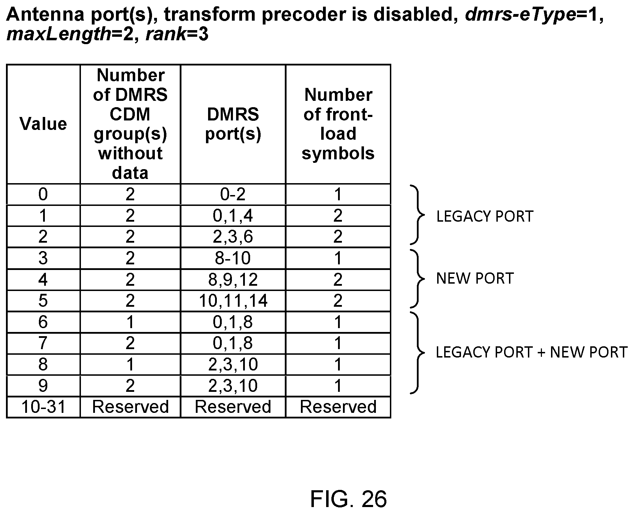

FIG. 26 shows an example of an enhanced antenna port table for the transform precoder being disabled, DMRS enhanced type = 1, maximum DMRS length = 2, and rank = 3. In the present example, antenna port field values 0 to 2 indicate existing ports, antenna port field values 3 to 5 indicate new ports, and antenna port field values 6 to 9 indicate combinations of existing ports and new ports. The new ports may be DMRS port indices obtained by adding X (= 8) to the existing ports. The combinations of existing ports and new ports may be rank 3/4, and may be in the same CDM group only.

The size of the antenna port field may be determined for each rank. When the rank is 3 or higher, the size of the antenna port field may be 3 bits. In this case, the number of rows may be 8 or less, with a part of rows of the enhanced antenna port table of the present example being deleted.

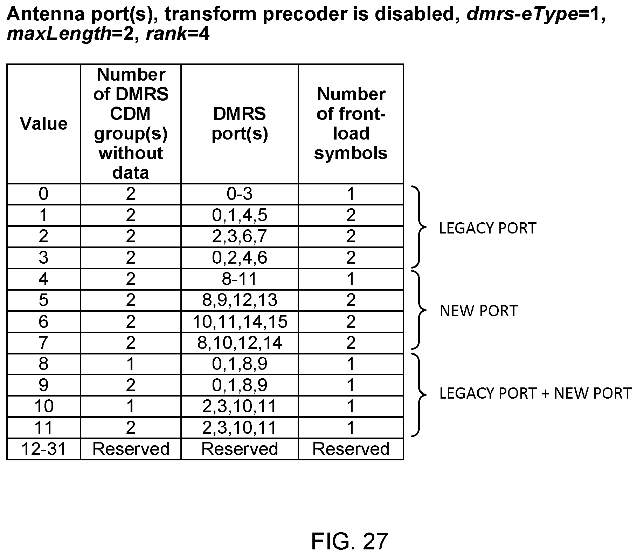

FIG. 27 shows an example of an enhanced antenna port table for the transform precoder being disabled, DMRS enhanced type = 1, maximum DMRS length = 2, and rank = 4. In the present example, antenna port field values 0 to 3 indicate existing ports, antenna port field values 4 to 7 indicate new ports, and antenna port field values 8 to 11 indicate combinations of existing ports and new ports. The new ports may be DMRS port indices obtained by adding X (= 8) to the existing ports. The combinations of existing ports and new ports may be rank 3/4, and may be in the same CDM group only.

### - Embodiment #2-3

Here, a case of DMRS enhanced type = 2 and maximum DMRS length = 1 will be described. Here, although an example in which the size of the antenna port field is increased from the size of the existing antenna port field by 1 bit is shown, the size of the antenna port field is not limited to this, and may be reduced from the size of the existing antenna port field by 1 bit, or may be increased from the size of the existing antenna port field by m bits.

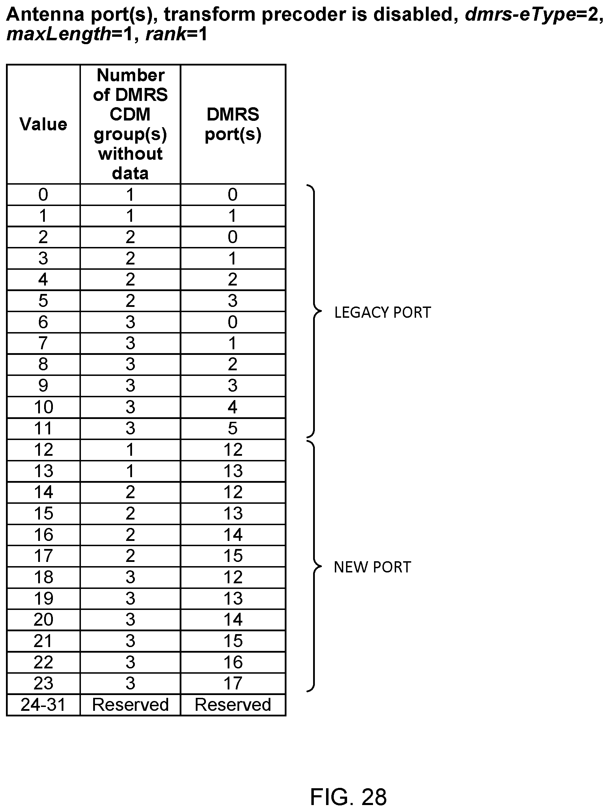

FIG. 28 shows an example of an enhanced antenna port table for DMRS enhanced type = 2, maximum DMRS length = 1, and rank = 1. In the present example, antenna port field values 0 to 11 indicate existing ports, and antenna port field values 12 to 23 indicate new ports. The new ports may be DMRS port indices obtained by adding X (= 8) to the existing ports. In the present example, although the size of the antenna port field is 5 bits, which is increased from the size of the existing antenna port field by 1 bit, the size of the antenna port field is not limited to this, and may be reduced from the size of the existing antenna port field by 1 bit, or may be increased from the size of the existing antenna port field by m bits.

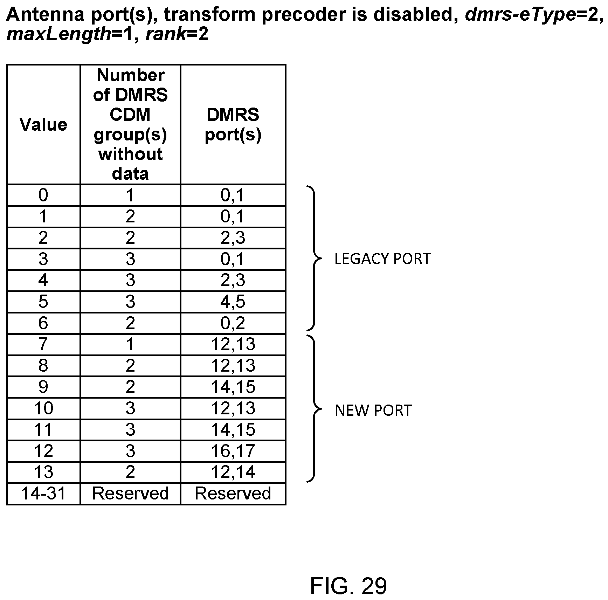

FIG. 29 shows an example of an enhanced antenna port table for DMRS enhanced type = 2, maximum DMRS length = 1, and rank = 2. In the present example, antenna port field values 0 to 6 indicate existing ports, and antenna port field values 7 to 13 indicate new ports. The new ports may be DMRS port indices obtained by adding X (= 8) to the existing ports.

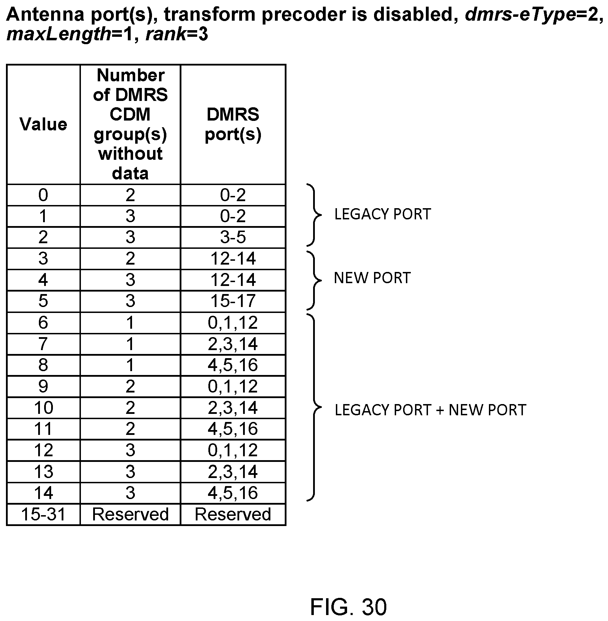

FIG. 30 shows an example of an enhanced antenna port table for DMRS enhanced type = 2, maximum DMRS length = 1, and rank = 3. In the present example, antenna port field values 0 to 2 indicate existing ports, antenna port field values 3 to 5 indicate new ports, and antenna port field values 6 to 14 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 3 in one CDM group can reduce DMRS overhead. This enables number of DMRS CDM groups without data = 1 or 2, and data can be mapped to available CDM groups.

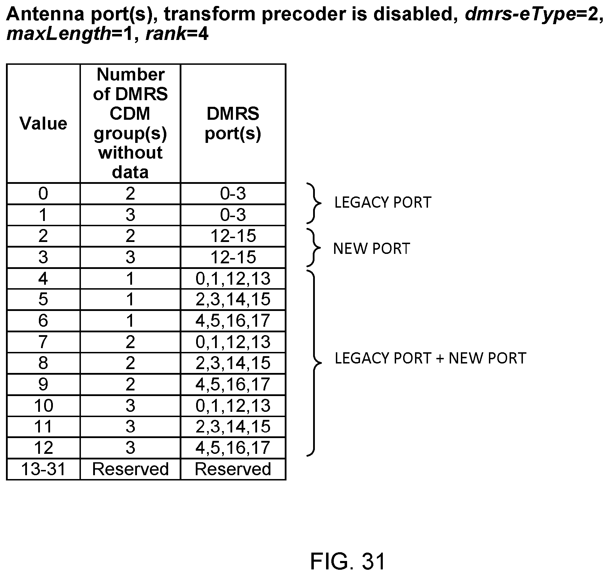

FIG. 31 shows an example of an enhanced antenna port table for DMRS enhanced type = 2, maximum DMRS length = 1, and rank = 4. In the present example, antenna port field values 0 to 1 indicate existing ports, antenna port field values 2 to 3 indicate new ports, and antenna port field values 4 to 12 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 4 in one CDM group can reduce DMRS overhead. This enables number of DMRS CDM groups without data = 1 or 2, and data can be mapped to available CDM groups.

### - Embodiment #2-4

Here, a case of DMRS enhanced type = 2 and maximum DMRS length = 2 will be described. Here, although an example in which the size of the antenna port field is increased from the size of the existing antenna port field by 1 bit is shown, the size of the antenna port field is not limited to this, and may be reduced from the size of the existing antenna port field by 1 bit, or may be increased from the size of the existing antenna port field by m bits.

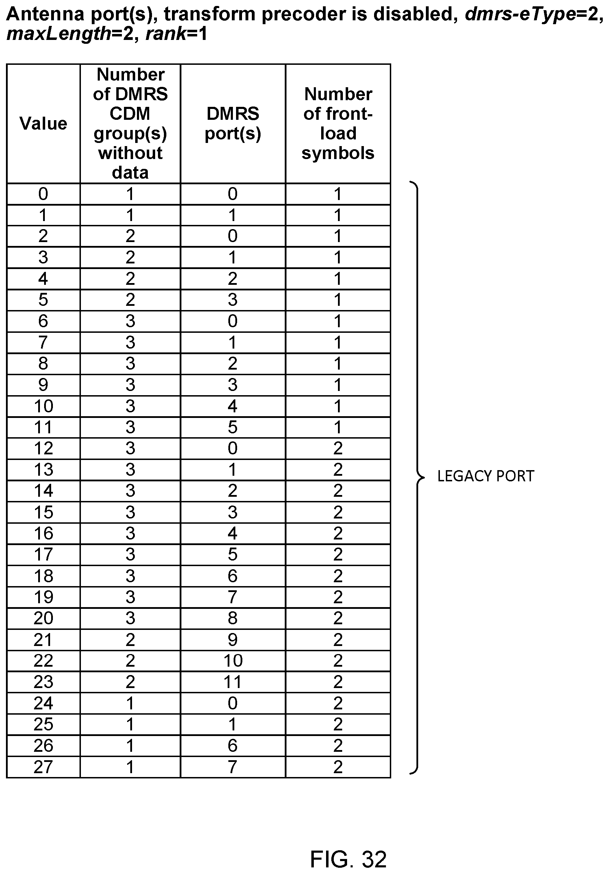

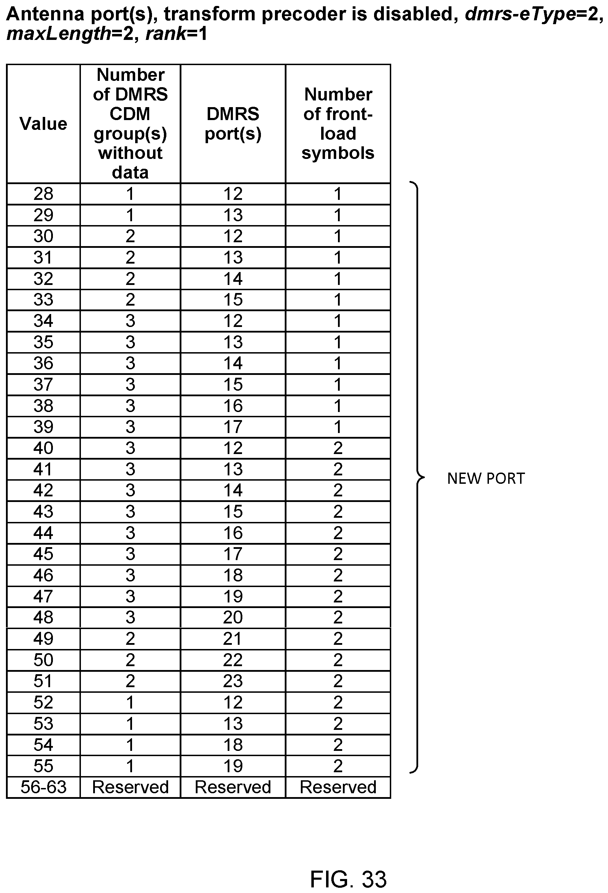

FIG. 32 and FIG. 33 show examples of enhanced antenna port tables for DMRS enhanced type = 2, maximum DMRS length = 2, and rank = 1. In the present example, antenna port field values 0 to 27 indicate existing ports, and antenna port field values 28 to 55 indicate new ports. The new ports may be DMRS port indices obtained by adding X (= 8) to the existing ports.

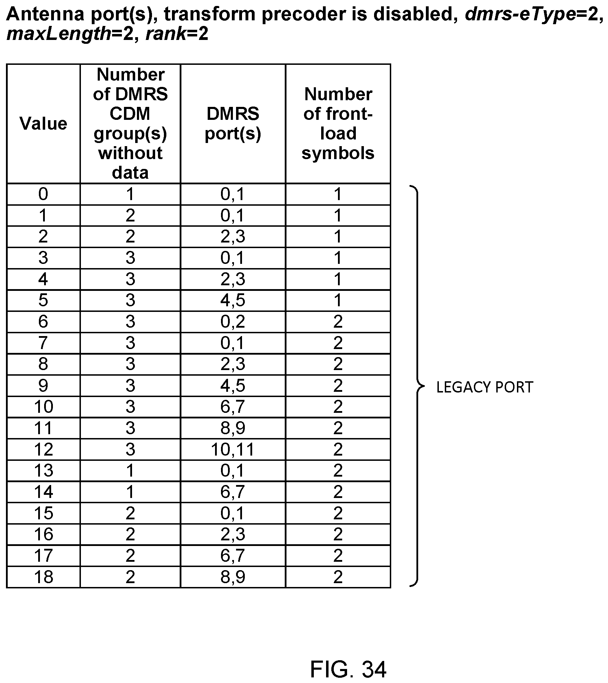

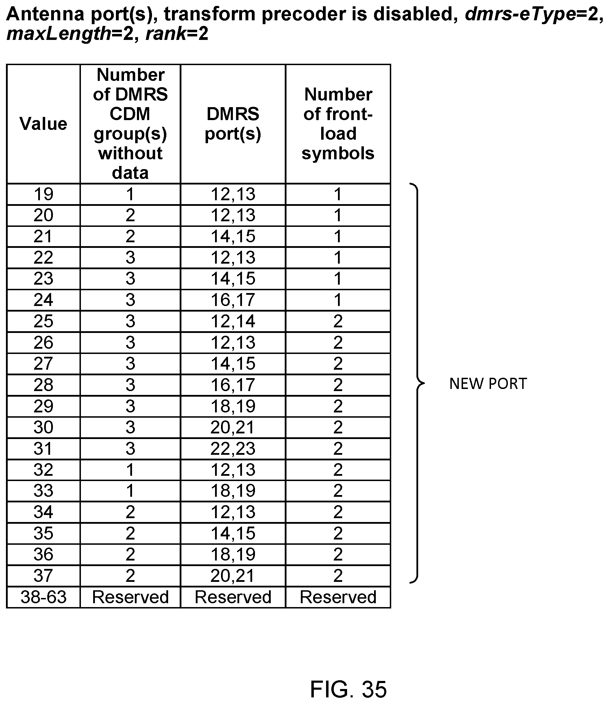

FIG. 34 and FIG. 35 show examples of enhanced antenna port tables for DMRS enhanced type = 2, maximum DMRS length = 2, and rank = 2. In the present example, antenna port field values 0 to 18 indicate existing ports, and antenna port field values 19 to 37 indicate new ports. The new ports may be DMRS port indices obtained by adding X (= 8) to the existing ports.

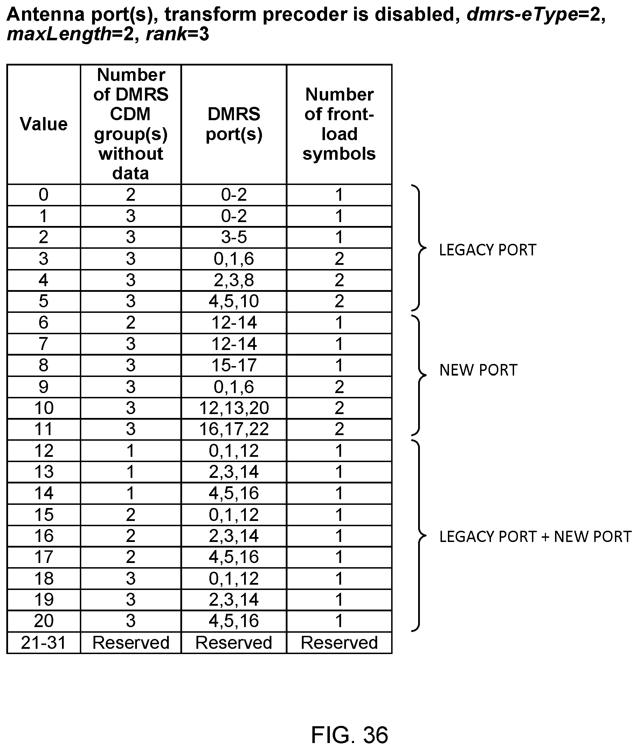

FIG. 36 shows an example of an enhanced antenna port table for DMRS enhanced type = 2, maximum DMRS length = 2, and rank = 3. In the present example, antenna port field values 0 to 5 indicate existing ports, antenna port field values 6 to 11 indicate new ports, and antenna port field values 12 to 20 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 3 in one CDM group can reduce DMRS overhead. This enables number of DMRS CDM groups without data = 1 or 2, and data can be mapped to available CDM groups.

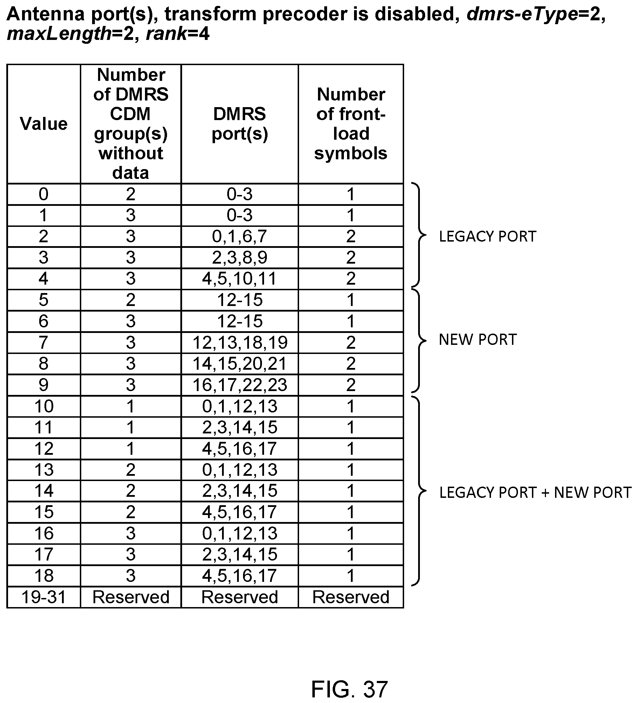

FIG. 37 shows an example of an enhanced antenna port table for DMRS enhanced type = 2, maximum DMRS length = 2, and rank = 4. In the present example, antenna port field values 0 to 4 indicate existing ports, antenna port field values 5 to 9 indicate new ports, and antenna port field values 10 to 18 indicate combinations of existing ports and new ports. The new ports may be DMRS port indices obtained by adding X (= 8) to the existing ports. The combinations of existing ports and new ports may be rank 3/4, and may be in the same CDM group only. In the combinations of existing ports and new ports, using rank 4 in one CDM group can reduce DMRS overhead. This enables number of DMRS CDM groups without data = 1 or 2, and data can be mapped to available CDM groups.

According to the present embodiment, the UE can be appropriately indicated with Rel-18 DMRS ports for a PUSCH.

### <Embodiment #3>

The present embodiment relates to an antenna port indication for a PUSCH.

Two CWs for a rank greater than 4 have been under study. For a PUSCH with a rank greater than 4, whether to use one CW or use two CWs may be configured by higher layer signaling, or use of two CWs only may be defined in a specification.

### - Embodiment #3-1

Antenna port tables for ranks 4 to 8 may include parameter sets for two CWs. The UE may determine or switch the antenna port table to refer to, depending on a configuration of the number of CWs. In this case, the size of the antenna port field may be determined or switched, depending on a configuration of the number of CWs. The size of the antenna port field for two CWs may be smaller than the size of the antenna port field for one CW. When one CW is configured, the UE may use the antenna port table for ranks 1 to 4 (may assume that a PUSCH of rank 5 or higher is not scheduled by DCI format 0_1/0_2). When two CWs are configured, the UE may use the antenna port table for ranks 5 to 8 (may assume that a PUSCH of rank 4 or less is not scheduled by DCI format 0_1/0_2).

In DMRS enhanced type = 1 and maximum DMRS length = 1, the antenna port tables for ranks 1 to 4 may be the same as those of FIG. 20 to FIG. 23, respectively. In the present example, the size of the antenna port field for ranks 1 to 4 is 4 bits.

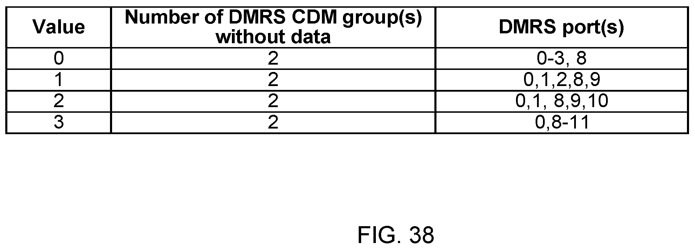

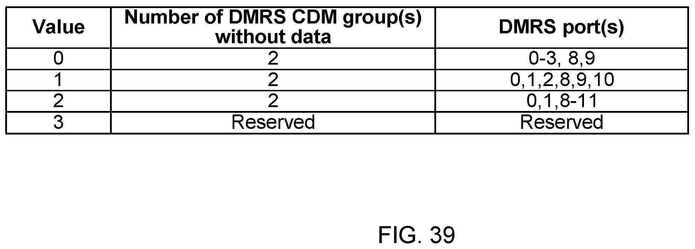

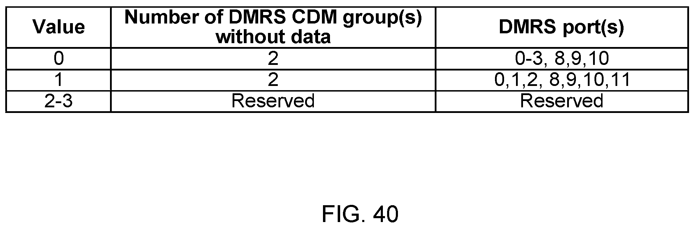

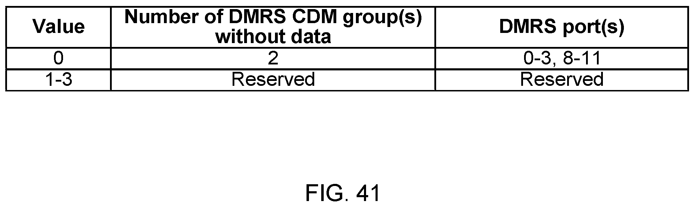

The size of the antenna port field for ranks 5 to 8 may be different from or smaller than the size of the antenna port field for ranks 1 to 4. FIG. 38 shows an example of an antenna port table for the transform precoder being disabled, DMRS enhanced type = 1, maximum DMRS length = 1, and rank = 5. FIG. 39 shows an example of an antenna port table for the transform precoder being disabled, DMRS enhanced type = 1 maximum DMRS length = 1, and rank = 6. FIG. 40 shows an example of an antenna port table for the transform precoder being disabled, DMRS enhanced type = 1, maximum DMRS length = 1, and rank = 7. FIG. 41 shows an example of an antenna port table for the transform precoder being disabled, DMRS enhanced type = 1, maximum DMRS length = 1, and rank = 8. In the present example, the size of the antenna port field for ranks 5 to 8 is 3 bits. The antenna port tables for ranks 5 to 8 may include a part of rows of the antenna port table of the present example.

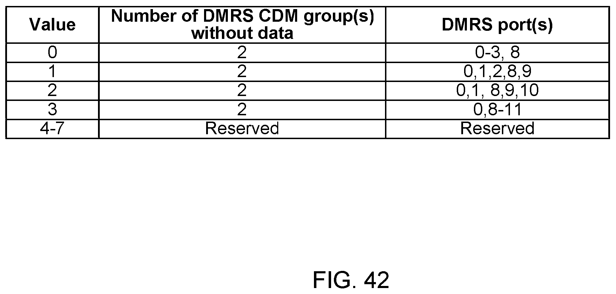

The size of the antenna port field for ranks 5 to 8 may be the same as the size of the antenna port field for ranks 1 to 4. The antenna port tables for the transform precoder being disabled, DMRS enhanced type = 1, maximum DMRS length = 1, and rank = 5 to 8 may be the same as those of FIG. 42 to FIG. 45 described later, respectively. In the present example, the size of the antenna port field for ranks 5 to 8 is 3 bits. The antenna port tables for ranks 5 to 8 may include a part of rows of the antenna port table of the present example.

### - Embodiment #3-2

Antenna port tables for ranks 4 to 8 may include parameter sets for two CWs. The UE may determine or switch the antenna port table to refer to, depending on a configuration of the number of CWs. In this case, the size of the antenna port field may be determined or switched, depending on a configuration of the number of CWs. The size of the antenna port field for two CWs may be smaller than the size of the antenna port field for one CW. When one CW is configured, the UE may use the antenna port table for ranks 1 to 4 (may assume that a PUSCH of rank 5 or higher is not scheduled by DCI format 0_1/0_2). When two CWs are configured, the UE may use the antenna port table for ranks 1 to 8. When one CW is configured, the size of the antenna port field for one CW (ranks 1 to 4) may be used. When two CWs are configured, the larger size or the smaller size of the size of the antenna port field for one CW (ranks 1 to 4) and the size of the antenna port field for two CWs (ranks 5 to 8) may be used. The size of the antenna port field for one CW (ranks 1 to 4) may be larger than the size of the antenna port field for two CWs (ranks 5 to 8). The size of the antenna port field when two CWs are configured may be equal to the size of the antenna port field when one CW is configured.

Switching/determination between one CW and two CWs may follow one of the following Switching Methods 1 and 2.

### [Switching Method 1]

Switching/determination between one CW and two CWs may be performed dynamically (by DCI). When ranks 1 to 4 are indicated, the UE may consider that one CW is indicated, may use a corresponding antenna port table, and may generate 1-bit HARQ-ACK information for one CW from one PDSCH reception. When ranks 5 to 8 are indicated, the UE may consider that two CWs are indicated, may use a corresponding antenna port table, and may generate 2-bit HARQ-ACK information corresponding to two CWs from one PDSCH reception.

### [Switching Method 2]

Switching/determination between one CW and two CWs may be performed by higher layer signaling. When two CWs are configured, the UE may generate 2-bit HARQ-ACK information corresponding to two CWs from one PDSCH reception. In this case, when ranks 1 to 4 are indicated, the UE may set 1-bit HARQ-ACK information corresponding to one CW of the two CWs as a specific value or a dummy, and generate 1-bit HARQ-ACK information corresponding to the other CW. For example, in this case, when ranks 1 to 4 are indicated, the UE may set 1-bit HARQ-ACK information corresponding to a second CW of the two CWs as a specific value. The specific value may be 0 or 1.

### <Embodiment #A>

The present embodiment relates to an antenna port indication for a PUSCH.

FIG. 42 is a diagram to show an example of an antenna port indication table to be referred to when the transform precoder is disabled, DMRS enhanced type = 1, maximum DMRS length = 1, and rank = 5 according to Embodiment #A. Values = 0,1,2,3 of the antenna port field correspond to {Number of Rel-15 DMRS ports, Number of Rel-18 DMRS ports}={4, 1}, {3, 2}, {2, 3}, {1, 4}, respectively.

Note that the table shown in FIG. 15 may be referred to by the UE when the UE is configured with a Rel-18 DMRS (or enabling of a Rel-18 DMRS / enabling of a Rel-18 DMRS port). A plurality of entries (rows in the table) indicating the same {Number of Rel-15 DMRS ports, Number of Rel-18 DMRS ports} may be defined, only some of the entries shown in FIG. 15 may be defined, or a combination of port indices different from the combinations of port indices shown in FIG. 15 may be defined (the same applies to the drawings below related to the antenna port indication table).

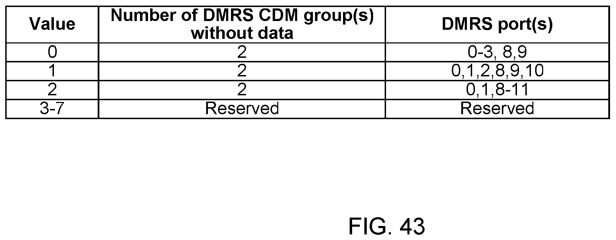

FIG. 43 is a diagram to show an example of an antenna port indication table to be referred to when the transform precoder is disabled, DMRS enhanced type = 1, maximum DMRS length = 1, and rank = 6 according to Embodiment #A. Values = 0,1,2 of the antenna port field correspond to {Number of Rel-15 DMRS ports, Number of Rel-18 DMRS ports} = {4, 2}, {3, 3}, {2, 4}, respectively.

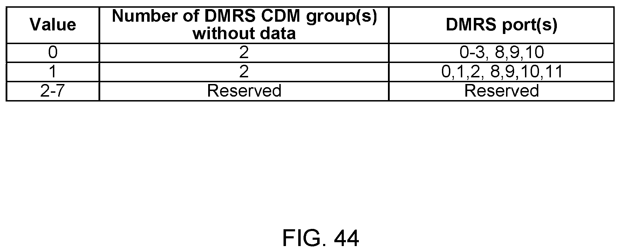

FIG. 44 is a diagram to show an example of an antenna port indication table to be referred to when the transform precoder is disabled, DMRS enhanced type = 1, maximum DMRS length = 1, and rank = 7 according to Embodiment #A. Values = 0,1 of the antenna port field correspond to {Number of Rel-15 DMRS ports, Number of Rel-18 DMRS ports} = {4, 3}, {3, 4}, respectively.

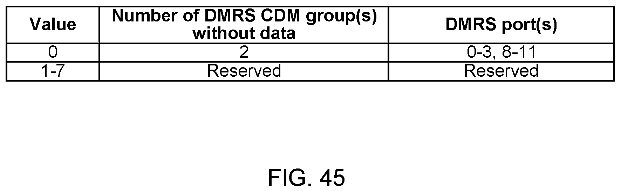

FIG. 45 is a diagram to show an example of an antenna port indication table to be referred to when the transform precoder is disabled, DMRS enhanced type = 1, maximum DMRS length = 1, and rank = 8 according to Embodiment #A. A value = 0 of the antenna port field corresponds to {Number of Rel-15 DMRS ports, Number of Rel-18 DMRS ports} = {4, 4}.

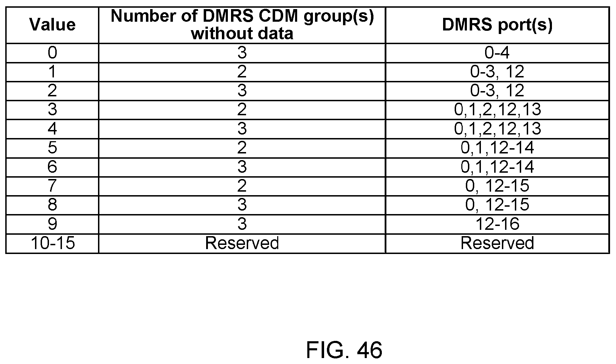

FIG. 46 is a diagram to show an example of an antenna port indication table to be referred to when the transform precoder is disabled, DMRS enhanced type = 2, maximum DMRS length = 1, and rank = 5 according to Embodiment #A. Values = 0,1-2,3-4,5-7,7-8,9 of the antenna port field correspond to {Number of Rel-15 DMRS ports, Number of Rel-18 DMRS ports} = {5, 0}, {4, 1}, {3, 2}, {2, 3}, {1, 4}, {0, 5}, respectively.

Note that DMRS ports corresponding to {Number of Rel-15 DMRS ports, Number of Rel-18 DMRS ports} = {5, 0}, {0, 5} shown in FIG. 46 use all of CDM groups #0 to #2, and thus the number of CDM groups is 3.

DMRS ports corresponding to {Number of Rel-15 DMRS ports, Number of Rel-18 DMRS ports} = {4, 1}, {3, 2}, {2, 3}, {1, 4} shown in FIG. 46 use two of CDM groups #0 to #2, and thus the number of CDM groups is 2 or 3. When this number of CDM groups is 2, the UE can transmit a PUSCH in a resource element corresponding to the remaining one CDM group in a DMRS symbol (a complex-valued symbol block (generated by coding data and the like) can be mapped to an indicated DMRS port (port for PUSCH transmission)), and thus increase in communication throughput or reduction in an error rate of the PUSCH based on reduction in a coding rate can be expected.

When the number of CDM groups is 3, another UE can perform DMRS/PUSCH transmission by using the remaining one CDM group, and thus improvement in system use efficiency can be expected.

Adopting such a table can indicate, for the UE, different numbers of CDM groups for the same combination of {Number of Rel-15 DMRS ports, Number of Rel-18 DMRS ports} (or the same combination of DMRS ports), and thus flexible control with consideration of traffic of each UE and the like can be performed.

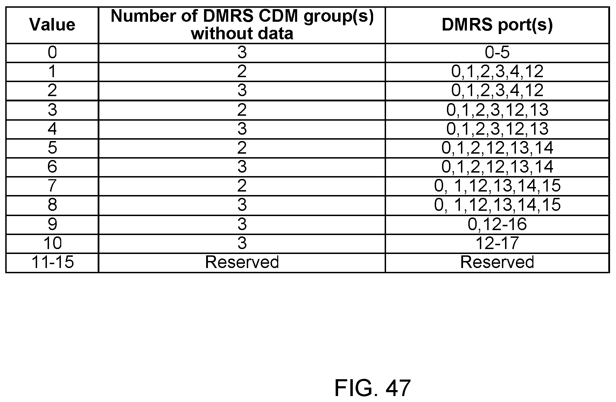

FIG. 47 is a diagram to show an example of an antenna port indication table to be referred to when the transform precoder is disabled, DMRS enhanced type = 2, maximum DMRS length = 1, and rank = 6 according to Embodiment #A.

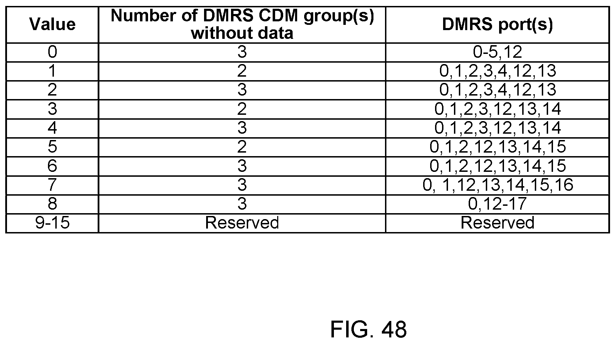

FIG. 48 is a diagram to show an example of an antenna port indication table to be referred to when the transform precoder is disabled, DMRS enhanced type = 2, maximum DMRS length = 1, and rank = 7 according to Embodiment #A.

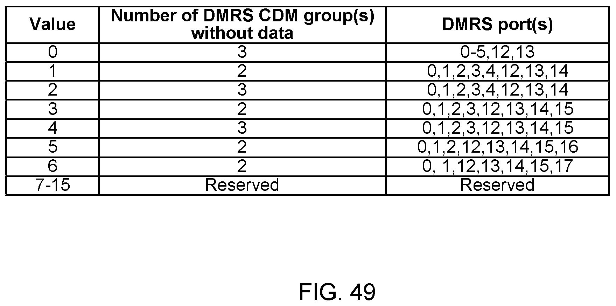

FIG. 49 is a diagram to show an example of an antenna port indication table to be referred to when the transform precoder is disabled, DMRS enhanced type = 2, maximum DMRS length = 1, and rank = 8 according to Embodiment #A.

According to Embodiment #A, PUSCH transmission with rank 5 or higher can be performed based on a single-symbol DMRS, and thus communication overhead for a DMRS can be reduced as compared with that for PUSCH transmission based on a double-symbol DMRS. An antenna port indication table with a maximum DMRS length = 1 is used, thereby allowing a size of an antenna port field of DCI to be reduced as compared with that in a case of a maximum DMRS length=2, and thus communication overhead for an antenna port field can be reduced.

According to the present embodiment, the UE can transmit a PUSCH by using appropriate DMRS ports.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting specific processing/operation/control/information for at least one of the above-described embodiments;
- supporting, for a PDSCH/PUSCH, the number of DMRS ports greater than that of an existing specification;
- supporting the number of DMRS ports greater than that of an existing specification by using a TD-OCC/FD-OCC/FDM for a DMRS of a PDSCH/PUSCH;
- supporting an FD OCC having a length of 4/6;
- supporting a new antenna port table; and
- supporting a new DCI field.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of functions for the respective embodiments, any RRC parameter for a specific release (for example, Rel. 18/19), or the like.

When the UE does not support at least one of the specific UE capability or is not configured with the specific information, the UE may apply, for example, Rel-15/16 operation.

### (Supplementary Note)

Regarding one embodiment of the present disclosure, the following supplementary notes of the invention will be given.

### {Supplementary Note 1}

A terminal including:
a receiving section that receives a configuration of one of a first demodulation reference signal (DMRS) to which a first frequency domain orthogonal cover code (FD-OCC) having a length of 2 is applied and a second DMRS to which a second FD-OCC having a length of 4 is applied; and
a control section that determines a size of an antenna port field in downlink control information for scheduling a physical downlink shared channel, based on the configuration.

### {Supplementary Note 2}

The terminal according to supplementary note 1, wherein a combination of ports of the second DMRS associated with values of the antenna port field includes at least one of one or more port numbers for the first DMRS and one or more port numbers for the second DMRS.

### {Supplementary Note 3}

The terminal according to supplementary note 1 or 2, wherein the receiving section receives information indicating that a size of a second antenna port field for the second DMRS is larger than a size of a first antenna port field for the first DMRS.

### {Supplementary Note 4}

The terminal according to any one of supplementary notes 1 to 3, wherein a plurality of parameter sets corresponding to a plurality of values of the second antenna port field when a size of a second antenna port field for the second DMRS is equal to a size of a first antenna port field for the first DMRS is a part of a plurality of parameter sets corresponding to a plurality of values of the second antenna port field when the size of the second antenna port field is larger than the size of the first antenna port field.

### (Supplementary Note)

Regarding one embodiment of the present disclosure, the following supplementary notes of the invention will be given.

### {Supplementary Note 1}

A terminal including:
a receiving section that receives a configuration of one of a first demodulation reference signal (DMRS) to which a first frequency domain orthogonal cover code (FD-OCC) having a length of 2 is applied and a second DMRS to which a second FD-OCC having a length of 4 is applied; and
a control section that determines a size of an antenna port field in downlink control information for scheduling a physical uplink shared channel, based on the configuration.

### {Supplementary Note 2}

The terminal according to supplementary note 1, wherein a combination of ports of the second DMRS associated with values of the antenna port field includes at least one of one or more port numbers for the first DMRS and one or more port numbers for the second DMRS.

### {Supplementary Note 3}

The terminal according to supplementary note 1 or 2, wherein the receiving section receives information indicating that a size of a second antenna port field for the second DMRS is larger than a size of a first antenna port field for the first DMRS.

### {Supplementary Note 4}

The terminal according to any one of supplementary notes 1 to 3, wherein for rank 3 or rank 4, a combination of ports of the second DMRS associated with values of the antenna port field includes one or more port numbers for the first DMRS and one or more port numbers for the second DMRS in one code division multiplexing (CDM) group.

### (Supplementary Note)

Regarding one embodiment of the present disclosure, the following supplementary notes of the invention will be given.

### {Supplementary Note 1}

A terminal including:
a receiving section that receives a configuration of one or two codewords for a physical uplink shared channel; and
a control section that controls transmission of the physical uplink shared channel with a rank from 4, based on the configuration.

### {Supplementary Note 2}

The terminal according to supplementary note 1, wherein an antenna port field size in downlink control information for scheduling the physical uplink shared channel is smaller than a size of an antenna port field for a rank of 4 or less.

### {Supplementary Note 3}

The terminal according to supplementary note 1 or 2, wherein an antenna port field size in downlink control information for scheduling the physical uplink shared channel is equal to a size of an antenna port field for a rank of 4 or less.

### {Supplementary Note 4}

The terminal according to any one of supplementary notes 1 to 3, wherein parameter sets for two codewords are associated with values of an antenna port field in downlink control information for scheduling the physical uplink shared channel.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

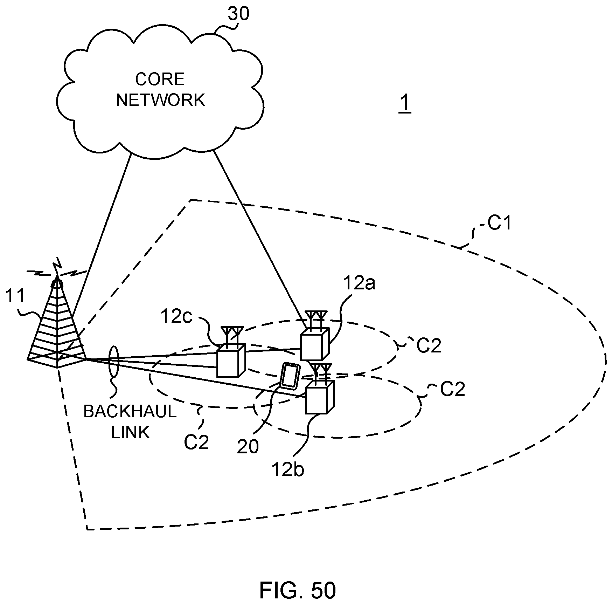

FIG. 50 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

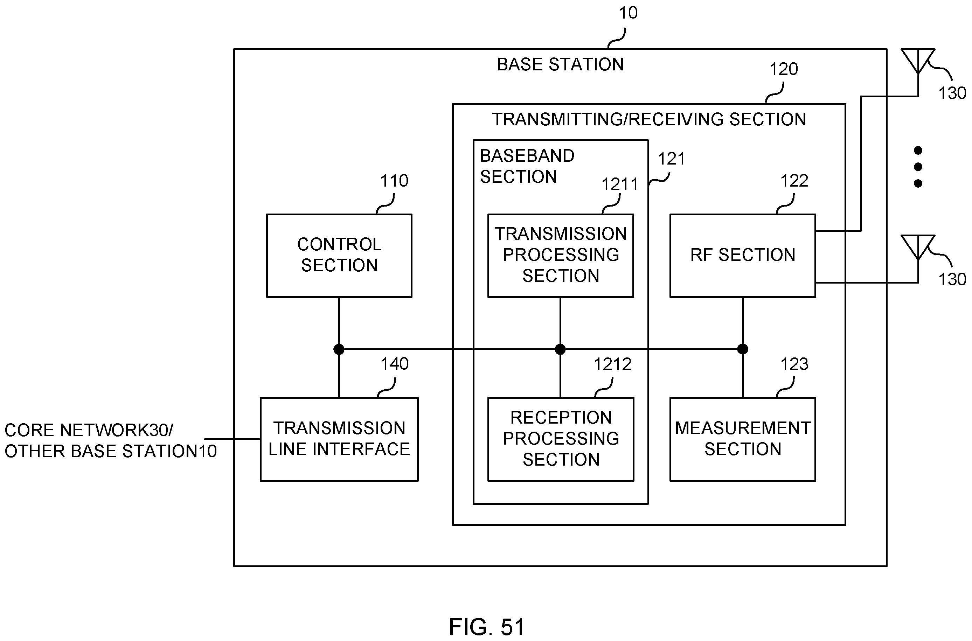

FIG. 51 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration of one of a first demodulation reference signal (DMRS) to which a first frequency domain orthogonal cover code (FD-OCC) having a length of 2 is applied and a second DMRS to which a second FD-OCC having a length of 4 is applied. The control section 110 may determine a size of an antenna port field in downlink control information for scheduling a physical downlink shared channel, based on the configuration.

The transmitting/receiving section 120 may transmit a configuration of one of a first demodulation reference signal (DMRS) to which a first frequency domain orthogonal cover code (FD-OCC) having a length of 2 is applied and a second DMRS to which a second FD-OCC having a length of 4 is applied. The control section 110 may determine a size of an antenna port field in downlink control information for scheduling a physical uplink shared channel, based on the configuration.

The transmitting/receiving section 120 may transmit a configuration of one or two codewords for a physical uplink shared channel. The control section 110 may control transmission of the physical uplink shared channel with a rank from 4, based on the configuration.

### (User Terminal)

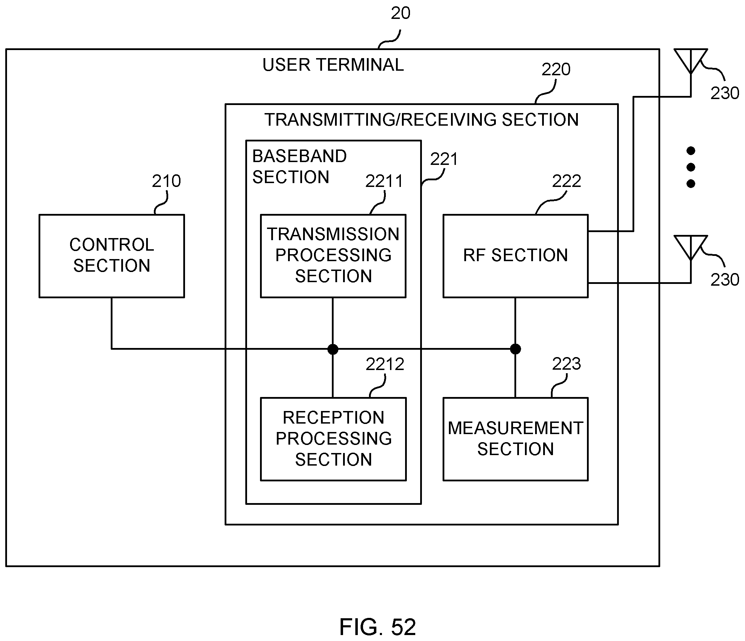

FIG. 52 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of one of a first demodulation reference signal (DMRS) to which a first frequency domain orthogonal cover code (FD-OCC) having a length of 2 is applied and a second DMRS to which a second FD-OCC having a length of 4 is applied. The control section 210 may determine a size of an antenna port field in downlink control information for scheduling a physical downlink shared channel, based on the configuration.

A combination of ports of the second DMRS associated with values of the antenna port field may include at least one of one or more port numbers for the first DMRS and one or more port numbers for the second DMRS.

The transmitting/receiving section 220 may receive information indicating that a size of a second antenna port field for the second DMRS is larger than a size of a first antenna port field for the first DMRS.

A plurality of parameter sets corresponding to a plurality of values of the second antenna port field when a size of a second antenna port field for the second DMRS is equal to a size of a first antenna port field for the first DMRS may be a part of a plurality of parameter sets corresponding to a plurality of values of the second antenna port field when the size of the second antenna port field is larger than the size of the first antenna port field.

The transmitting/receiving section 220 may receive a configuration of one of a first demodulation reference signal (DMRS) to which a first frequency domain orthogonal cover code (FD-OCC) having a length of 2 is applied and a second DMRS to which a second FD-OCC having a length of 4 is applied. The control section 210 may determine a size of an antenna port field in downlink control information for scheduling a physical uplink shared channel, based on the configuration.

A combination of ports of the second DMRS associated with values of the antenna port field may include at least one of one or more port numbers for the first DMRS and one or more port numbers for the second DMRS.

The transmitting/receiving section 220 may receive information indicating that a size of a second antenna port field for the second DMRS is larger than a size of a first antenna port field for the first DMRS.

For rank 3 or rank 4, a combination of ports of the second DMRS associated with values of the antenna port field may include one or more port numbers for the first DMRS and one or more port numbers for the second DMRS in one code division multiplexing (CDM) group.

The transmitting/receiving section 220 may receive a configuration of one or two codewords for a physical uplink shared channel. The control section 210 may control transmission of the physical uplink shared channel with a rank from 4, based on the configuration.

An antenna port field size in downlink control information for scheduling the physical uplink shared channel may be smaller than a size of an antenna port field for a rank of 4 or less.

An antenna port field size in downlink control information for scheduling the physical uplink shared channel may be equal to a size of an antenna port field for a rank of 4 or less.

Parameter sets for two codewords may be associated with values of an antenna port field in downlink control information for scheduling the physical uplink shared channel.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

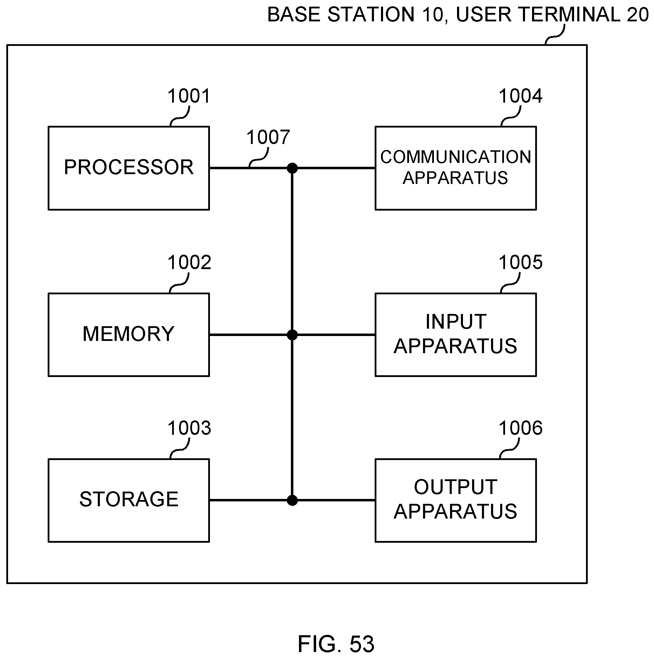

For example, a base station, a user terminal, and so on according to one embodiment of the present disclosure may function as a computer that executes the processes of the radio communication method of the present disclosure. FIG. 53 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (at least one of these hardware).

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

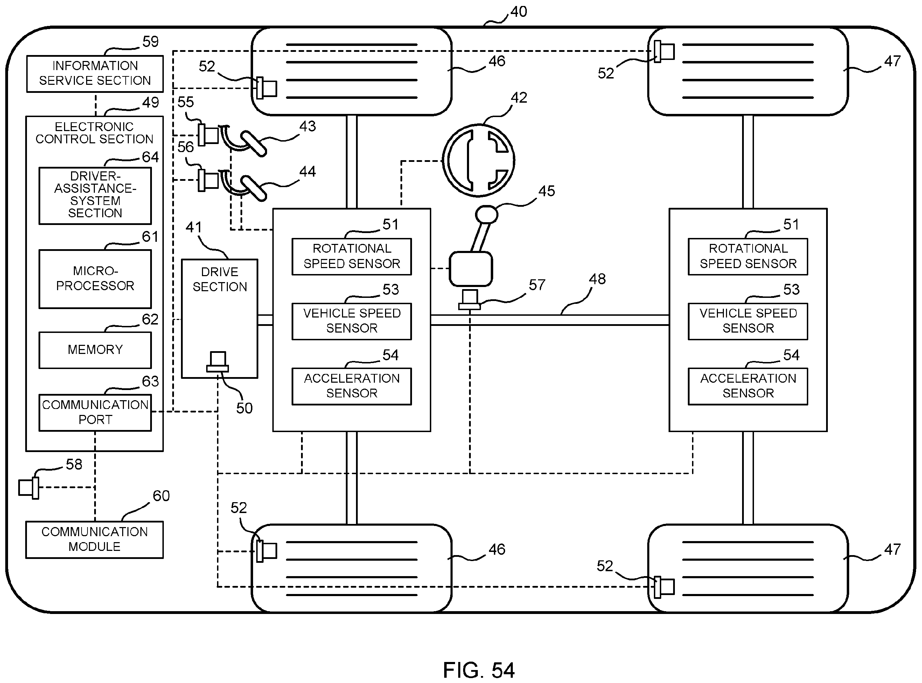

FIG. 54 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives a configuration of one or two codewords for a physical uplink shared channel; and
a control section that controls transmission of the physical uplink shared channel with a rank from 4, based on the configuration.

2. The terminal according to claim 1, wherein
an antenna port field size in downlink control information for scheduling the physical uplink shared channel is smaller than a size of an antenna port field for a rank of 4 or less.

3. The terminal according to claim 1, wherein
an antenna port field size in downlink control information for scheduling the physical uplink shared channel is equal to a size of an antenna port field for a rank of 4 or less.

4. The terminal according to claim 1, wherein
parameter sets for two codewords are associated with values of an antenna port field in downlink control information for scheduling the physical uplink shared channel.

5. A radio communication method for a terminal, the radio communication method comprising:
receiving a configuration of one or two codewords for a physical uplink shared channel; and
controlling transmission of the physical uplink shared channel with a rank from 4, based on the configuration.

6. A base station comprising:
a transmitting section that transmits a configuration of one or two codewords for a physical uplink shared channel; and
a control section that controls transmission of the physical uplink shared channel with a rank from 4, based on the configuration.
